# EUROPEAN PATENT APPLICATION

(11) **EP 4 354 574 A1**
(43) Date of publication of application: **17.04.2024**
(21) Application number: 21960383.4
(22) Date of filing: 29.10.2021
(51) Int. Cl.: H01M 10/0525, H01M 50/249

(54) **BATTERY, ELECTRICAL DEVICE, AND METHOD AND DEVICE FOR PREPARING BATTERY**

(30) Priority: 12.10.2021 CN 202111188271
(71) Applicant: Contemporary Amperex Technology Co., Limited, Fujian PRC 352100 (CN)
(72) Inventor: XU, Hu, Ningde, Fujian 352100 (CN)
(74) Representative: Rowlands, Stuart Michael
(86) International application number: PCT/CN2021/127413
(87) International publication number: WO 2023/060656

(57) **Abstract**

Embodiments of the present application provide a battery (10), an electrical device, and a method and device for preparing the battery, capable of ensuring both electrical performance and safety performance of the battery. The battery (10) comprises: a box body (100); and a first battery cell group (200a) and a second battery cell group (200b), the first battery cells (20a) and the second battery cells (20b) having the same battery capacity and different volumetric energy densities; the first battery cells (20a) in the first battery cell group (200a) and the second battery cells (20b) in the second battery cell group (200b) are arranged in a first direction (x), and the first battery cell group (200a) and the second battery cell group (200b) are arranged in a second direction (y); the size of each of the first battery cells (20a) is different from that of each of the second battery cells (20b) in the first direction (x), and the size of the first battery cell group (200a) is the same as that of the second battery cell group (200b) in the first direction (x).

## Description

This application claims priority to Chinese Patent Application No. 202111188271.0, filed with the China National Intellectual Property Administration on October 12, 2021 and entitled "BATTERY CELL, BATTERY, AND ELECTRIC APPARATUS", which is incorporated herein by reference in its entirety.

### TECHNICAL FIELD

Embodiments of this application relate to the battery field, and more specifically, to a battery, an electrical apparatus, and a method and an apparatus for manufacturing battery.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development.

In the development of battery technology, in addition to electrical performance improvement of a battery, safety is another non-negligible issue. Therefore, how to ensure both the electrical performance and safety performance of the battery is an urgent technical problem that needs to be solved in battery technology.

### SUMMARY

This application provides a battery, an electric apparatus, a method for manufacturing battery, and an apparatus for manufacturing battery, so as to ensure both the electrical performance and the safety performance of the battery.

According to a first aspect, a battery is provided, including: a box; and a first battery cell group and a second battery cell group that are accommodated in the box, where the first battery cell group includes at least one first battery cell and the second battery cell group includes at least one second battery cell, the first battery cell and the second battery cell have a same battery capacity and different volumetric energy densities, the at least one first battery cell in the first battery cell group is arranged in a first direction, the at least one second battery cell in the second battery cell group is arranged in a second direction, the first direction is perpendicular to the second direction, a size of the first battery cell in the first direction is different from a size of the second battery cell in the first direction, and a size of the first battery cell group in the first direction is the same as a size of the second battery cell group in the first direction.

Based on a technical solution in an embodiment of this application, the battery may include two types of battery cells with different volumetric energy densities: first battery cell and second battery cell. The battery may use battery cells with a higher volumetric energy density to store more electricity per unit volume, resulting in better electrical performance, and use battery cells with a lower volumetric energy density to improve the safety performance of the battery. Therefore, based on the technical solution in this embodiment of this application, the battery can be guaranteed to have relatively balanced safety performance and electrical performance, thereby comprehensively improving overall performance of the battery and enabling the battery to have a broader application prospect. In addition, to facilitate electrical connection between the first battery cell and the second battery cell in the battery, the capacity of the first battery cell is equal to the capacity of the second battery cell, and the volume of the first battery cell is different from the volume of the second battery cell when the volumetric energy density of the first battery cell is different from the volumetric energy density of the second battery cell. Therefore, in this embodiment of this application, although the size of the first battery cell in the first battery cell group in a first direction is less than the size of the second battery cell in the second battery cell group in the first direction, the size of the first battery cell group in the first direction has a very small difference from or is equal to the size of the second battery cell group in the first direction, which facilitates the first battery cell group and the second battery cell group to be mutually attached and installed as a whole in the box, preventing a problem of space waste caused by size mismatch between the first battery cell group and the second battery cell group and increasing the overall energy density of the battery.

In some possible implementations, the first direction is parallel to a length direction of the first battery cell and/or the first direction is parallel to a length direction of the second battery cell.

Based on the technical solutions in these implementations, the first battery cell and/or the second battery cell may have the longest length and a wall with a large area in the first direction. When the first battery cell group and the second battery cell group are mutually attached through their walls at large area, the attachment reliability between the first battery cell group and the second battery cell group may be improved, thereby improving the stability of the installation of the first battery cell group and the second battery cell group in the box.

In some possible implementations, the second direction is parallel to a thickness direction of the first battery cell and/or the second direction is parallel to a thickness direction of the second battery cell.

Based on the technical solutions in these implementations, a space occupied by the first battery cell and/or the second battery cell in its thickness direction is relatively small, so that mutual arrangement of the first battery cell group and the second battery cell group may be conveniently implemented by taking advantage of the thickness direction of the first battery cell and/or the second battery cell. In addition, in these implementations, a wall facing the second direction in the first battery cell is a wall with a largest area in the first battery cell, and/or a wall facing the second direction in the second battery cell is a wall with a largest area in the second battery cell. Therefore, the wall with the largest area in the first battery cell and/or the second battery cell may be used to implement the attachment between the first battery cell group and the second battery cell group, improving the attachment stability therebetween to the greatest extent.

In some possible implementations, a third direction perpendicular to the first direction and the second direction is parallel to a thickness direction of the first battery cell, and/or the third direction perpendicular to the first direction and the second direction is parallel to a thickness direction of the second battery cell.

Based on the technical solutions in these implementations, when the third direction is parallel to the thickness direction of the first battery cell and/or the thickness direction of the second battery cell, a wall facing the third direction in the first battery cell is a wall with the largest area in the first battery cell, and/or a wall facing the third direction in the second battery cell is a wall with the largest area in the second battery cell. Therefore, when the first battery cell group and the second battery cell group are mutually attached, the first battery cell and the second battery cell are not mutually attached through their walls at their largest area, so that a small amount of heat is transferred between the first battery cell and the second battery cell. When thermal runaway occurs in either the first battery cell or the second battery cell, only a small amount of heat is transferred to the other battery cell, having little influence on the other battery cell and thereby improving safety performance of the battery.

In some possible implementations, the battery includes a plurality of first battery cell groups arranged in the third direction and/or a plurality of second battery cell groups arranged in the third direction.

In some possible implementations, the battery includes a plurality of first battery cell groups arranged in the second direction and at least one second battery cell group arranged in the second direction; where the size of the first battery cell in the first direction is less than the size of the second battery cell in the first direction.

In some possible implementations, in the second direction, the at least one second battery cell group is disposed between adjacent two of the first battery cell groups.

Based on the technical solutions in these implementations, because the second battery cell has a larger size in the first direction than the first battery cell, the second battery cell may have higher strength and stiffness in the first direction, and the second battery cell group disposed between the first battery cell groups may function as a beam, thereby enhancing the overall strength and stiffness of the battery.

In some possible implementations, in the second direction, at least one second battery cell group is disposed on at least one end of a whole formed by a plurality of first battery cell groups.

Based on the technical solutions in these implementations, the second battery cell group disposed on at least one end of a whole formed by the first battery cell group may serve as a busbar for the first battery cell group in the first direction, thereby simplifying the busbar design for the battery and improving the energy density and overall performance of the battery.

In some possible implementations, the thickness direction of the first battery cell is parallel to the second direction, and the thickness direction of the second battery cell is parallel to the third direction, the third direction being perpendicular to both the first direction and the second direction.

High-pressure gas and heat are generated inside the first battery cell and the second battery cell in continuous operation. The high-pressure gas causes the first battery cell and the second battery cell to swell, imposing great stress on the walls with a large area in the first and second battery cells, and most of the heat inside the first and second battery cells is transferred also through the walls with a large area. Based on the technical solutions in the embodiments of this application, the first battery cells and the second battery cells are different in thickness direction, that is, an orientation of the walls with the largest area in the first battery cells is different from an orientation of the walls with the largest area in the second battery cells, and the stress and heat generated by the first battery cell group may be transferred in a direction different from the stress and heat generated by the second battery cell group. This prevents accumulation of stress in a same direction from affecting the strength and stiffness of the battery in this direction, and also prevents continuous transfer of heat in the same direction from affecting the normal operation of a plurality of battery cells, thereby enhancing the overall stiffness and strength of the battery and improving the safety performance of the battery in the electric apparatus.

In some possible implementations, the first battery cell includes a first wall and a second wall that are interconnected, and the second battery cell includes a first wall and a second wall, where the first wall of the first battery cell and the first wall of the second battery cell are perpendicular to the direction of gravity, and the second wall of the first battery cell and the second wall of the second battery cell are inclined with respect to the direction of gravity; and the second wall of at least one of the first battery cells in the first battery cell group is configured for attachment to the second wall of at least one of the second battery cells in the second battery cell group.

Based on the technical solution in this embodiment of this application, in the first battery cell group and the second battery cell group that are arranged in the second direction, the second walls of the first battery cell and the second battery cell that are adjacent are mutually attached and inclined with respect to the direction of gravity. In this way, interaction forces parallel to the direction of gravity are formed between the adjacent second walls, resulting in interaction forces formed between the first battery cell and the second battery cell that are adjacent to cause the first battery cell and second battery cell to be mutually restrained and restricted, thereby enhancing the overall stiffness and strength of the battery and reducing the potential safety hazards caused by vibration and impact of the battery during use. Further, compared with a wall in the vertical direction, areas of the inclined second walls of the first and second battery cells are larger than an area of the vertically disposed wall. In this way, the second walls of the first and second battery cells may be coated with a relatively large area of structural adhesive, and the stability and overall stiffness and strength of the battery may be further enhanced.

In some possible implementations, the first battery cell includes two first walls disposed opposite each other and two second walls disposed opposite each other, and the first battery cell has a parallelogram or trapezoid cross section on a plane perpendicular to the first walls and the second walls thereof; and/or the second battery cell includes two first walls disposed opposite each other and two second walls disposed opposite each other, and the second battery cell has a parallelogram or trapezoid cross section on a plane perpendicular to the first walls and the second walls thereof.

In some possible implementations, the first wall and the second wall of the first battery cell that are interconnected extend in the length direction of the first battery cell; and/or the first wall and the second wall of the second battery cell that are interconnected extend in the length direction of the second battery cell.

Based on the technical solutions in these implementations, the first wall and the second wall of the first battery cell and/or the second battery cell extend in the length direction of the respective battery cells, so that the first wall and the second wall have a relatively long length and then have a relatively large area. For the first wall, it is perpendicular to the first direction, that is, perpendicular to the direction of gravity. If the first wall has a relatively large area, the first battery cell and/or the second battery cell have relatively high stability when the first battery cell and/or the second battery cell are disposed on a horizontal plane through their respective first walls. For the second wall, if it has a large area, the interaction force between the second walls of the first battery cell and the second battery cell that are adjacent may be improved, which also facilitates use of more structural adhesive on the second walls, improving the stability between the first battery cell and the second battery cell.

In some possible implementations, the first battery cell further includes a third wall located at one end of the first battery cell in the length direction, and electrode terminals and/or a pressure relief mechanism of the first battery cell is disposed on the third wall; and/or the second battery cell further includes a third wall located at one end of the second battery cell in the length direction, and electrode terminals and/or a pressure relief mechanism of the second battery cell is disposed on the third wall.

Based on the technical solutions in these implementations, the electrode terminals and/or a pressure relief mechanism of the first battery cell and the second battery cell can be disposed on the third walls at the ends thereof in the length direction, without affecting attachment of the first walls and the second walls of the first battery cell and the second battery cell to other members, where the first walls and the second walls of the first battery cell and the second battery cell extend in the length direction thereof and have a larger area. This ensures better stability of the first battery cell and the second battery cell.

In some possible implementations, the battery further includes an end plate disposed on at least one end of a whole formed by the first battery cell group and second battery cell group in the second direction, and the end plate has an inclined wall with respect to the direction of gravity, and the inclined wall is configured for attachment to the second walls of a plurality of first battery cells in the first battery cell group, and/or the inclined wall is configured for attachment to the second wall of at least one second battery cell in the second battery cell group.

Based on the technical solutions in these implementations, the end plate may support and restrain a whole formed by the first battery cell groups and second battery cell groups in the second direction, so as to enhance the stability of the first battery cell groups and the second battery cell groups in the box and enhance the overall strength and stiffness of the battery.

In some possible implementations, a thickness of an end of the end plate facing the direction of gravity is greater than a thickness of an end of the end plate facing the opposite direction of gravity.

Based on the technical solutions in these implementations, the end plate has a larger thickness at the end facing the direction of gravity, thus ensuring that the end of the battery facing the direction of gravity has higher stiffness, strength and stability. When the battery is installed on a chassis of a vehicle, the battery can better resist external impact, for example, flying stones from the bottom of the vehicle, enhancing the stability of the installation of the battery in the vehicle and ensuring the operation performance of the battery.

In some possible implementations, in the first battery cell group, a first spacer is disposed between adjacent ones of the first battery cells, where the first spacer is at least one of the following structures: a beam, a thermal management component, and a structural adhesive.

Based on the technical solutions in these implementations, the first spacer is disposed between adjacent ones of the first battery cells in the first battery cell group, which can enhance the overall stiffness and strength of the battery and improve the overall impact resistance of the battery. In addition, if the first spacer is a thermal management component, for example, a cooling component such as a cooling plate, the thermal management component has a battery cell thermal management function in addition to certain stiffness and strength and can adjust the temperatures of the first battery cells, further ensuring the working performance and safety performance of the battery.

In some possible implementations, a second spacer is disposed between the first battery cell group and the second battery cell group, where the second spacer is at least one of the following structures: a beam, a thermal management component, and a structural adhesive.

Based on the technical solutions in these implementations, the second spacer is disposed between the first battery cell group and the second battery cell group, which can enhance the overall stiffness and strength of the battery and improve the overall impact resistance of the battery. In addition, if the second spacer is a thermal management component, for example, a cooling component such as a cooling plate, the working performance and safety performance of the battery can be further ensured.

According to a second aspect, an electric apparatus is provided, including the battery according to any one of the first aspect or the possible implementations of the first aspect, where the battery is configured to supply electric energy.

According to a third aspect, a method for manufacturing battery is provided, including: providing a box; providing a first battery cell group and a second battery cell group, where the first battery cell group includes at least one first battery cell and the second battery cell group includes at least one second battery cell, and the first battery cell and the second battery cell have a same battery capacity and different volumetric energy densities, the at least one first battery cell in the first battery cell group is arranged in a first direction, and the at least one second battery cell in the second battery cell group is arranged in a second direction, the first direction is perpendicular to the second direction, a size of the first battery cell in the first direction is different from a size of the second battery cell in the first direction, and a size of the first battery cell group in the first direction is the same as a size of the second battery cell group in the first direction; and accommodating the first battery cell group and the second battery cell group in the box.

According to a fourth aspect, an apparatus for manufacturing battery is provided, including: a providing module, configured to provide a box and provide a first battery cell group and a second battery cell group, where the first battery cell group includes at least one first battery cell and the second battery cell group includes at least one second battery cell, the first battery cell and the second battery cell have a same battery capacity and different volumetric energy densities, the at least one first battery cell in the first battery cell group is arranged in a first direction, and the at least one the second battery cell in the second battery cell group is arranged in a second direction, the first direction is perpendicular to the second direction, a size of the first battery cell in the first direction is different from a size of the second battery cell in the first direction, and a size of the first battery cell group in the first direction is the same as a size of the second battery cell group in the first direction; and an installation module, configured to accommodate the first battery cell group and the second battery cell group in the box.

Based on the technical solution in this embodiment of this application, the battery may include two types of battery cells with different volumetric energy densities: first battery cell and second battery cell. The battery may use battery cells with a higher volumetric energy density to store more electricity per unit volume, resulting in better electrical performance, and use battery cells with a lower volumetric energy density to improve the safety performance of the battery. Therefore, based on the technical solution in this embodiment of this application, the battery can be guaranteed to have relatively balanced safety performance and electrical performance, thereby comprehensively improving overall performance of the battery and enabling the battery to have a broader application prospect. In addition, to facilitate electrical connection between the first battery cell and the second battery cell in the battery, the capacity of the first battery cell is equal to the capacity of the second battery cell, and the volume of the first battery cell is different from the volume of the second battery cell when the volumetric energy density of the first battery cell is different from the volumetric energy density of the second battery cell. Therefore, in the embodiments of this application, although the size of the first battery cell in the first battery cell group in a first direction is less than the size of the second battery cell in the second battery cell group in the first direction, the size of the first battery cell group in the first direction has a very small difference from or is equal to the size of the second battery cell group in the first direction, which facilitates the first battery cell group and the second battery cell group to be mutually attached and installed as a whole in a box, preventing a problem of space waste caused by size mismatch between the first battery cell group and the second battery cell group and increasing the overall energy density of the battery.

### BRIEF DESCRIPTION OF DRAWINGS

To describe the technical solutions in the embodiments of this application more clearly, the following briefly describes the accompanying drawings required for describing the embodiments of this application. It will be apparent that the accompanying drawings in the following description show merely some embodiments of this application, and persons of ordinary skill in the art may still derive other drawings from the accompanying drawings without creative efforts.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery cell according to an embodiment of this application;
FIG. 4 is a schematic structural diagram of a battery according to an embodiment of this application;
FIG. 5 is a schematic structural diagram of a battery according to an embodiment of this application;
FIG. 6 is a schematic structural diagram of a battery according to an embodiment of this application;
FIG. 7 is a schematic structural diagram of a battery according to an embodiment of this application;
FIG. 8 is a schematic structural diagram of a battery according to an embodiment of this application;
FIG. 9 shows schematic structural diagrams of three types of first battery cells according to an embodiment of this application;
FIG. 10 shows schematic front and side views of a first battery cell according to an embodiment of this application;
FIG. 11 shows schematic top and sectional views of a battery according to an embodiment of this application;
FIG. 12 shows schematic top and sectional views of a battery according to an embodiment of this application;
FIG. 13 shows schematic top and sectional views of a battery according to an embodiment of this application;
FIG. 14 shows schematic top and sectional views of a battery according to an embodiment of this application;
FIG. 15 shows schematic top and sectional views of a battery according to an embodiment of this application;
FIG. 16 shows schematic top and sectional views of a battery according to an embodiment of this application;
FIG. 17 shows schematic top and sectional views of a battery according to an embodiment of this application;
FIG. 18 shows schematic top and sectional views of a battery according to an embodiment of this application;
FIG. 19 is a schematic flowchart of a method for manufacturing battery according to an embodiment of this application; and
FIG. 20 is a schematic block diagram of an apparatus for manufacturing battery according to an embodiment of this application.

In the accompanying drawings, the figures are not drawn to scale.

### DESCRIPTION OF EMBODIMENTS

The following further describes the implementations of this application in detail with reference to the accompanying drawings and embodiments. The detailed description and accompanying drawings of the following embodiments are intended to illustrate the principle of this application, but are not intended to limit the scope of this application. This application is not limited to the embodiments described herein.

In the descriptions of this application, it should be noted that, unless otherwise stated, "plurality" means two or more; and the orientations or positional relationships indicated by the terms "upper", "lower", "left", "right", "inside", "outside", and the like are merely intended to help the descriptions of this application and simplify the descriptions other than indicate or imply that the apparatuses or components must have specific orientations, or be constructed and manipulated with specific orientations, and therefore shall not be construed as limitations on this application. In addition, the terms "first", "second", and "third" are merely intended for a purpose of description, and shall not be understood as an indication or implication of relative importance. "Perpendicular" means being perpendicular with an allowable range of error other than being strictly perpendicular. "Parallel" means being parallel with an allowable range of error other than being strictly parallel.

The orientation terms appearing in the following description all are directions shown in the figures, and do not limit the specific structure of the application. In the descriptions of this application, it should be further noted that unless otherwise specified and defined explicitly, the terms "install", "connect", and "join" should be understood in their general senses. For example, the terms may be a fixed connection, a detachable connection, or an integrated connection, or may be a direct connection, or an indirect connection through an intermediate medium. Persons of ordinary skill in the art can understand specific meanings of these terms in this application based on specific situations.

The term "and/or" in this specification is only an associative relationship for describing associated objects, indicating that three relationships may be present. For example, A and/or B may indicate three cases: presence of only A; presence of both A and B; and presence of only B. In addition, the character "/" in this specification generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described in this application may combine with another embodiments.

In this application, a battery is a physical module that includes one or more battery cells to supply electric energy. For example, the battery mentioned in this application may include a battery module, a battery pack, or the like. A battery typically includes a box configured to enclose one or more battery cells. The box can prevent liquids or other foreign matters from affecting charging or discharging of the battery cells.

Optionally, the battery cell may include a lithium-ion secondary battery, a lithium-ion primary battery, a lithium-sulfur battery, a sodium/lithium-ion battery, a sodium-ion battery, a magnesium-ion battery, or the like. This is not limited in the embodiments of this application. In some implementations, the battery cell may also be referred to as a jelly roll.

The battery cell includes an electrode assembly and an electrolyte, and the electrode assembly includes a positive electrode plate, a negative electrode plate, and a separator. The battery cell functions mainly relying on migration of metal ions between the positive electrode plate and the negative electrode plate. The positive electrode plate includes a positive electrode current collector and a positive electrode active substance layer. The positive electrode active substance layer is coated on a surface of the positive electrode current collector, and a current collector uncoated with the positive electrode active substance layer protrudes from the current collector coated with the positive electrode active substance layer and serves as a positive tab. A lithium-ion battery is used as an example, for which, the positive electrode current collector may be made of aluminum, and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is coated on a surface of the negative electrode current collector. A current collector uncoated with the negative electrode active substance layer protrudes from the current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. A material of the separator may be polypropylene (Polypropylene, PP), polyethylene (Polyethylene, PE), or the like. In addition, the electrode assembly may be a wound structure or a stacked structure, but the embodiments of this application are not limited thereto.

For the development of battery technology, many design factors need to be considered, for example, performance parameters such as energy density, cycle life, discharge capacity, and charge and discharge rate, as well as the stability of installation of the battery in the electric apparatus, so as to enhance the safety of the battery in the electric apparatus.

In some battery packaging technologies, a plurality of battery cells (cell) are first integrated into a battery module (module), and then the battery module is installed in a battery box to form a battery pack (pack). In some other battery packaging technologies, a plurality of battery cells may be directly disposed in the box to form a battery pack, which eliminates an intermediate state of forming the battery module, thereby reducing the weight of the battery pack and improving the energy density of the battery. This second packaging technology may also be referred to as a cell to pack (cell to pack) packaging technology in the related art, and this battery pack may be simply referred to as a battery in this application.

In the cell to pack packaging technology, the battery cells are generally conventional prismatic battery cells, and types and sizes of a plurality of battery cells in the battery pack are unified. Although the battery cells with a unified size are convenient for unified packaging, the single battery cell type will cause the battery to have prominent shortcomings in some aspects, affecting promotion and use of the battery. For example, if all the battery cells in the battery are high-energy density battery cells, the high-energy density battery cells can store more electricity to improve the performance of the battery, but the high-energy density battery cells may also generate more heat during operation and has higher security risks. On the contrary, if all the battery cells in the battery are low-energy density battery cells, although the low-energy density battery can have higher safety, the amount of electricity the battery can store is limited, thereby affecting the overall electrical performance of the battery.

In view of this, the application provides a technical solution. A battery box contains a first battery cell group and a second battery cell group, where the first battery cell group includes at least one first battery cell and the second battery cell group includes at least one second battery cell, and the volumetric energy density of the first battery cell is different from the volumetric energy density of the second battery cell. Therefore, based on this technical solution, the battery can include two types of battery cells with different volumetric energy densities: first battery cell and second battery cell, so that the battery can have relatively balanced safety performance and electrical performance, thereby comprehensively improving overall performance of the battery and enabling the battery to have a broader application prospect. In addition, to facilitate electrical connection between the first battery cells and the second battery cells, the two can be designed to have a same capacity, but the first battery cell is different from the second battery cell in volumetric energy density. Therefore, the volume of the first battery cell is different from the volume of the second battery cell. To facilitate installation of the first battery cells and the second battery cells in the box, at least one first battery cell is arranged in a first direction to form a first battery cell group, and at least one second battery cell is also arranged in the first direction to form a second battery cell group. The first battery cell group and the second battery cell group are arranged in a second direction perpendicular to the first direction. Although the size of the first battery cell in the first battery cell group in the first direction is different from the size of the second battery cell in the second battery cell group in the first direction, the size of the first battery cell group in the first direction has a very small difference from or is equal to the size of the second battery cell group in the first direction, which facilitates the first battery cell group and the second battery cell group to be mutually attached and installed as a whole in the box, preventing a problem of space waste caused by size mismatch between the first battery cell group and the second battery cell group and increasing the overall energy density of the battery.

The technical solution described in this embodiment of this application is applicable to various apparatuses that use batteries, for example, cell phones, portable devices, laptop computers, battery operated vehicles, electric toys, power tools, electric vehicles, ships, and spacecraft, for example, spacecraft including aircraft, rockets, space shuttles, and spacecraft.

It should be understood that the technical solutions described in the embodiments of this application are applicable to not only the apparatuses described above but also all apparatuses using batteries. However, for brevity of description, in the following embodiments, an electric vehicle is used as an example for description.

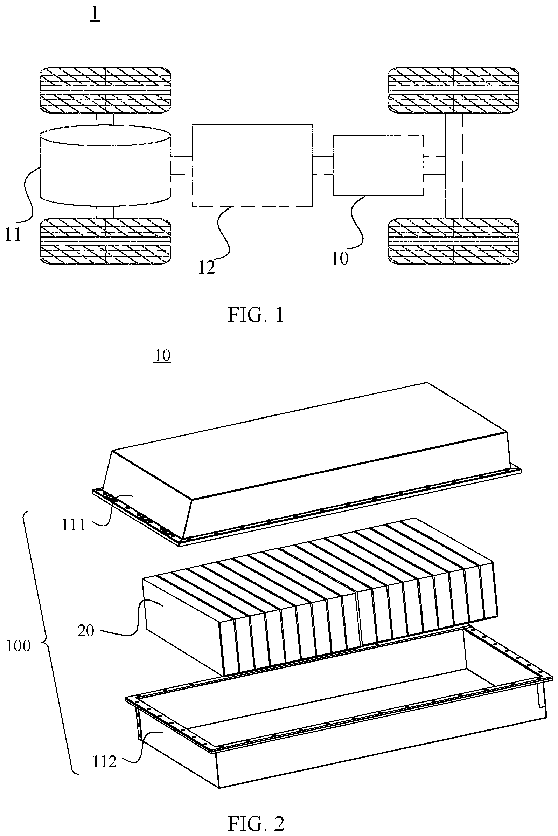

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 11, a controller 12, and a battery 10 may be provided inside the vehicle 1, where the controller 12 is configured to control the battery 10 to supply power to the motor 11. For example, the battery 10 may be disposed at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to satisfy power needs of start, navigation, and running of the vehicle 1. In another embodiment of this application, the battery 10 can be used not only as the operational power source for the vehicle 1, but also as a driving power source for the vehicle 1, replacing or partially replacing fossil fuel or natural gas to provide driving traction for the vehicle 1.

To meet different power usage requirements, the battery may include a plurality of battery cells, and the plurality of battery cells may be connected in series, parallel, or series-parallel, where being connected in series-parallel means a combination of series and parallel connections. A battery may also be referred to as a battery pack. Optionally, a plurality of battery cells may be connected in series, parallel, or series-parallel to form a battery module, and then a plurality of battery modules may be connected in series, parallel, or series-parallel to form a battery. In a word, the plurality of battery cells may be directly combined into a battery, or may first combined into battery modules that are then combined into a battery.

For example, as shown in FIG. 2 that is a schematic structural diagram of a battery 10 according to an embodiment of this application, the battery 10 may include a plurality of battery cells 20. The battery 10 may further include a box (or a cover body) that has a hollow structure inside, and the plurality of battery cells 20 are accommodated in the box. As shown in FIG. 2, the box may include two portions that are referred to herein as a first portion 111 and a second portion 112 respectively. The first part 111 and the second part 112 are fitted together. Shapes of the first portion 111 and the second portion 112 may be determined according to a shape of a combined plurality of battery cells 20. Each of the first portion 111 and the second portion 112 may have an opening. For example, both the first portion 111 and the second portion 112 may be hollow cuboids and each has only one face as an opening face. The opening of the first portion 111 and the opening of the second portion 112 are disposed oppositely, and the first portion 111 and the second portion 112 are fitted with each other to form the box with a closed chamber. The plurality of battery cells 20 are connected in parallel, series, or series-parallel, and then placed into the box formed by fitting the first portion 111 and the second portion 112.

Optionally, in an implementation, the plurality of battery cells (cell) 20 may be first integrated into at least one battery module (module), and then the battery module is installed in the box 100 of the battery 10 to form a battery pack (pack). In this implementation, auxiliary structural members such as beams may be arranged between the battery modules, which can improve the stability of installation of the battery modules in the box 100.

Optionally, in a second implementation, a plurality of battery cells 20 may be directly connected to each other, disposed in the box 100 to form a battery pack, which eliminates an intermediate state of forming the battery module, and the box 100 can be provided with no auxiliary structural members such as beams, thus reducing the mass of the battery 10 and increasing the energy density of the battery 10. This implementation may also be known as cell to pack (cell to pack, CTP) installation technology in the related art.

Optionally, in the third implementation, the box 100 can be integrated into an electric apparatus where the battery 10 is located, in other words, the box 100 can be integrally formed with the structural members in the electric apparatus. A plurality of connected battery cells 20 may be directly disposed in the box 100 of the electric apparatus. In an example, the box 100 may be integrated in a local area of the chassis of the vehicle 1, and a plurality of connected battery cells 20 may be directly installed on the chassis of the vehicle 1. This implementation may also be known as cell to chassis (cell to chassis, CTC) installation technology in the related art.

Optionally, the battery 10 may further include other structures. Details are not described herein. For example, the battery 10 may further include a busbar, where the busbar is configured to implement an electrical connection between a plurality of battery cells 20, for example, a parallel connection, a series connection, or a series-parallel connection. Specifically, the busbar may enable the electrical connection between the battery cells 20 by connecting the electrode terminals of the battery cells 20. Further, the busbar may be fixed to the electrode terminal of the battery cell 20 by welding. Electrical energy of the plurality of battery cells 20 can be further drawn out of the box through a conductive mechanism. Optionally, the conducting mechanism may also belong to the busbar.

Based on different power demands, battery cells 20 can be set in any quantity. The plurality of battery cells 20 may be connected in series, parallel, or series-parallel to achieve greater capacity or power.

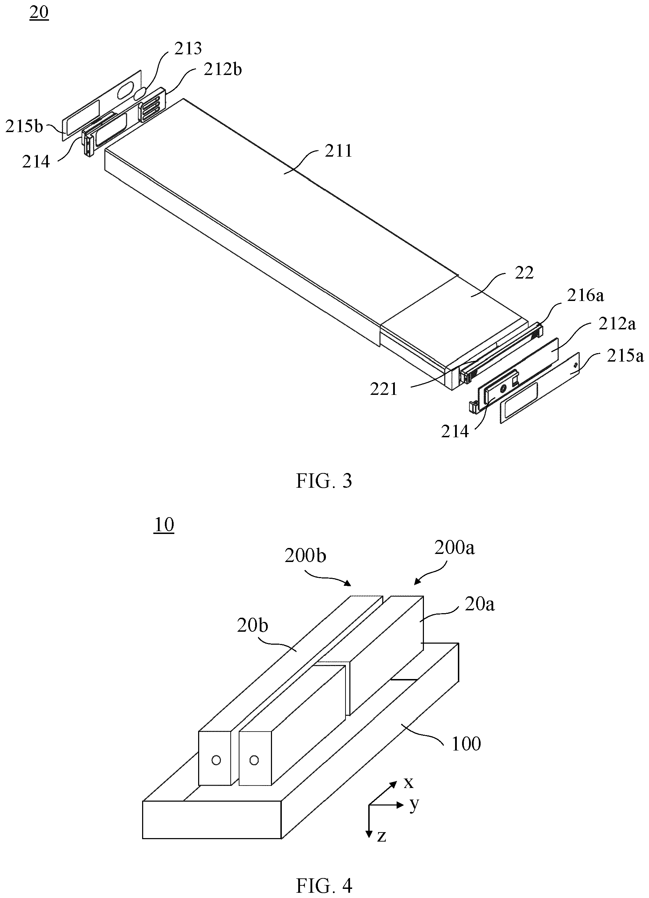

FIG. 3 is a schematic structural diagram of a battery cell 20 according to an embodiment of this application. The battery cell 20 includes one or more electrode assemblies 22, a housing 211, a first cover plate 212a, and a second cover plate 212b. A wall of the housing 211, the first cover plate 212a, and the second cover plate 212b each are referred to as a wall of the battery cell 20. The housing 211 depends on a combined shape of the one or more electrode assemblies 22. In an example, the housing 211 shown in FIG. 3 may be a hollow cuboid. The housing 211 has an opening on at least one face such that the one or more electrode assemblies 22 can be placed inside the housing 211. For example, in the embodiment shown in FIG. 3, the housing 211 has an opening on each of two opposite sides, and the first cover plate 212a and the second cover plate 212b cover the openings on the two sides respectively and are connected to the housing 211 to form a closed chamber for accommodating the electrode assembly 22. The housing 211 is filled with an electrolyte, for example, a liquid electrolyte.

The battery cell 20 may further include two electrode terminals 214. Optionally, as shown in FIG. 3, the two electrode terminals 214 may be disposed on the first cover plate 212a and the second cover plate 212b, respectively. Alternatively, in some other embodiments, the two electrode terminals 214 may be disposed on a same cover plate; for example, both are disposed on the first cover plate 212a or the second cover plate 212b.

The first cover plate 212a and the second cover plate 212b are typically flat plates, and the two electrode terminals 214 can be fixed on flat surfaces of the first cover plate 212a and the second cover plate 212b, respectively, and the two electrode terminals 214 are a positive electrode terminal and a negative electrode terminal, respectively. Each of the electrode terminals 214 is correspondingly provided with one connection member, which may alternatively be referred to as a current collection member. The current collection member is located between the first cover plate 212a and the electrode assembly 22 and between the second cover plate 212b and the electrode assembly 22. The connection member is configured to electrically connect the electrode assembly 22 and the electrode terminals 214.

Optionally, as shown in FIG. 3, the battery cell 20 may further include a first bracket 216a and a second bracket (not shown in the figure). The first bracket 216a is disposed between the electrode assembly 22 and the first cover plate 212a for fixing and connecting the first cover plate 212a. Correspondingly, the second bracket is disposed between the electrode assembly 22 and the second cover plate 212b for fixing and connecting the second cover plate 212b. Optionally, the connection members connecting the electrode assembly 22 and the electrode terminal 214 may be located in the first bracket 216a and the second bracket, respectively.

Alternatively, in the battery cell 20, each of the electrode assemblies 22 has a first tab 221 and a second tab. The first tab 221 and the second tab have opposite polarities. For example, when the first tab 221 is a positive tab, the second tab is a negative tab. The first tabs 221a of the one or more electrode assemblies 22 are connected to one electrode terminal through one connection member, and the second tabs of the one or more electrode assemblies 22 are connected to the other electrode terminal through the other connection member. For example, as shown in FIG. 3, the electrode terminal 214 located on the first cover plate 212a may be connected to the first tab 221 through a connection member located in the first bracket 216a. In addition, the other electrode terminal 214 located on the second cover plate 212b may be connected to the second tab through another connection member located on the second bracket.

In an example, a pressure relief mechanism 213 may be further provided on one of the walls of the battery cell 20. The pressure relief mechanism 213 is configured to be actuated to relieve internal pressure or temperature when the internal pressure or temperature of the battery cell 20 reaches a threshold.

Optionally, in another embodiment of this application, the pressure relief mechanism 213 and the electrode terminals 214 are disposed on a same wall of the battery cell 20. In an example, as shown in FIG. 3, the electrode terminal 214 and the pressure relief mechanism 213 may both be disposed on the second cover plate 212b of the battery cell 20.

The pressure relief mechanism 213 and the electrode terminal 214 being disposed on the same wall of the battery cell 20 can facilitate the processing and installation of the pressure relief mechanism 213 and the electrode terminal 214, and is conducive to improving the production efficiency of the battery 10.

Certainly, in other embodiments of this application, the pressure relief mechanism 213 and the electrode terminals 214 may alternatively be disposed on different walls of the battery cell 20. For example, the two electrode terminals 214 in the battery 10 are disposed on the first cover plate 212a and the second cover plate 212b of the battery cell 20, respectively, and the pressure relief mechanism 213 is disposed on a wall of the battery 10 other than the first cover plate 212a and the second cover plate 212b.

The pressure relief mechanism 213 may be a part of the wall on which it is located, or may be a separate structure from the wall on which it is located, and may be fixed on the wall on which it is located by, for example, soldering. For example, in the embodiment shown in FIG. 3, when the pressure relief mechanism 213 is a part of the second cover plate 212b, the pressure relief mechanism 213 may be formed by providing an indentation on the second cover plate 212b. A thickness of the second cover plate 212b corresponding to the indentation is less than thicknesses of rest regions of the pressure relief mechanism 213 other than at the indentation. The weakest portion of the pressure relief mechanism 213 is at the indentation. When gas generated by the battery cells 20 is too much and the internal pressure of the housing 211 rises and reaches a threshold, or the internal reactions of the battery cells 20 generate heat and cause internal temperature of the battery cells 20 to rise and reach a threshold, the pressure relief mechanism 213 may break at the indentation, causing the inside and the outside of the housing 211 to be communicated and the gas pressure and temperature to be discharged out through the breakage of the pressure relief mechanism 213, thereby preventing the battery cell 20 from exploding.

In addition, the pressure relief mechanism 213 may be any possible pressure relief mechanisms. This is not limited in the embodiments of this application. For example, the pressure relief mechanism 213 may be a temperature-sensitive pressure relief mechanism configured to melt when the internal temperature of the battery cell 20 provided with the pressure relief mechanism 213 reaches the threshold; and/or the pressure relief mechanism 213 may be a pressure-sensitive pressure relief mechanism configured to break when the internal air pressure of the battery cell 20 provided with the pressure relief mechanism 213 reaches the threshold.

Optionally, as shown in FIG. 3, the battery cell 20 may further include a first protective layer 215a and a second protective layer 215b. The first protective layer 215a and the second protective layer 215b respectively cover the first cover plate 212a and the second cover plate 212b to protect members on the two cover plates. Optionally, when the first cover plate 212a and the second cover plate 212b are metal cover plates, the first protective layer 215a and the second protective layer 215b may be insulating layers for insulating the metal cover plates from the outside. In addition, as can be seen from FIG. 3, the first protective layer 215a and the second protective layer 215b may have openings adapted to the electrode terminal 214 and the pressure relief mechanism 213 formed thereon, so that the electrode terminal 214 is connected to the busbar through the opening, and the pressure relief mechanism 213 releases internal air pressure of the battery cell 20 through the opening.

FIG. 4 is a schematic structural diagram of a battery 10 according to an embodiment of this application.

As shown in FIG. 4, the battery 10 includes: a box 100; and a first battery cell group 200a and a second battery cell group 200b that are accommodated in the box 100. The first battery cell group 200a includes at least one first battery cell 20a, the second battery cell group 200b includes at least one second battery cell 20b, and the first battery cell 20a and the second battery cell 20b have a same battery capacity and different volumetric energy densities.

The at least one first battery cell 20a in the first battery cell group 200a is arranged in a first direction x, the at least one second battery cell 20b in the second battery cell group 200b is arranged in the first direction x, and the first battery cell group 200a and the second battery cell group 200b are arranged in a second direction y, where the first direction x and the second direction y are perpendicular to each other.

In addition, a size of the first battery cell 20a in the first direction x is different from a size of the second battery cell 20b in the first direction x, and a size of the first battery cell group 200a in the first direction x is the same as a size of the second battery cell group 200b in the first direction x.

Optionally, in this embodiment of this application, the box 100 may be the box 100 in the embodiment shown in FIG. 2 above. To facilitate the installation of the box 100 in the electric apparatus, as an example rather than a limitation, the box 100 may be of a hollow hexahedral structure.

Optionally, in this embodiment of this application, for internal structures of the first battery cell 20a in the first battery cell group 200a and the second battery cell 20b in the second battery cell group 200b, reference may be made to the related descriptions of the battery cell 20 in the embodiment shown in FIG. 3 above.

Optionally, to facilitate the installation of the first battery cells 20a and the second battery cells 20b in the box 100 and improve the stability of installation of the battery cells 20, the first battery cell 20a and the second battery cell 20b may have a polyhedral structure. As an example rather than a limitation, in this embodiment of this application, the first battery cell 20a and the second battery cell 20b may be hexahedral structures.

Specifically, the volumetric energy density of the first battery cell 20a in this embodiment of this application is different from the volumetric energy density of the second battery cell 20b. In an example, the volumetric energy density of the first battery cell 20a may be greater than the volumetric energy density of the second battery cell 20b. As an example rather than a limitation, a cathode material of the first battery cell 20a includes but is not limited to a nickel cobalt manganese (NiCoMn, NCM) ternary material, for example, NCM 811, NCM 622, and NCM 523; and a cathode material of the second battery cell 20b includes but is not limited to a lithium iron phosphate (LiFePO, LFP) material, a lithium titanate (LiTiO) material, a lithium manganese oxide (LiMnO) material, a lithium-rich manganese-based material, or NCM 111.

Therefore, based on this technical solution, the battery 10 may include two types of battery cells with different volumetric energy densities: first battery cell 20a and second battery cell 20b. The battery 10 may use battery cells with a higher volumetric energy density to store more electricity per unit volume, resulting in better electrical performance, and use battery cells with a lower volumetric energy density to improve the safety performance of the battery 10. Therefore, based on the technical solution in this embodiment of this application, the battery 10 can have relatively balanced safety performance and electrical performance, thereby comprehensively improving overall performance of the battery 10 and enabling the battery 10 to have a broader application prospect.

To facilitate electrical connection between the first battery cells 20a and the second battery cells 20b in the battery 10, the capacity of the first battery cell 20a needs to be equal to the capacity of the second battery cell 20b, to guarantee the electrical performance of the battery 10. Optionally, on the basis that the volumetric energy density of the first battery cell 20a is greater than the volumetric energy density of the second battery cell 20b, and that the capacity of the first battery cell 20a is equal to the capacity of the second battery cell 20b, the volume of the first battery cell 20a is less than the volume of the second battery cell 20b.

Optionally, as shown in FIG. 4, in some examples, the size of the first battery cell 20a in the first direction x is less than the size of the second battery cell 20b in the first direction x, and the sizes of the first battery cell 20a in other directions may be the same as the sizes of the second battery cell 20b in the other directions, so that the volume of the first battery cell 20a is less than the volume of the second battery cell 20b. Certainly, in other examples, the sizes of the first battery cell 20a in other directions may alternatively be different from the sizes of the second battery cell 20b in other directions except in the first direction x. Specific sizes of the first battery cell 20a and the second battery cell 20b can be designed according to an actual situation. This is not specifically limited in this embodiment of this application.

To facilitate the installation of the first battery cells 20a and the second battery cells 20b in the box 100 of the battery 10, in the embodiment shown in FIG. 4, the at least one first battery cell 20a is arranged in the first direction x to form a first battery cell group 200a, and the at least one second battery cell 20b is also arranged in the first direction x to form a second battery cell group 200b. The first battery cell group 200a and the second battery cell group 200b are arranged in the second direction y perpendicular to the first direction x. Although the size of the first battery cell 20a in the first battery cell group 200a in the first direction x is less than the size of the second battery cell 20b in the second battery cell group 200b in the first direction x, the size of the first battery cell group 200a in the first direction x has a very small difference from or is equal to the size of the second battery cell group 200b in the first direction x, which facilitates the first battery cell group 200a and the second battery cell group 200b to be mutually attached and installed as a whole in a box 100, preventing a problem of space waste caused by size mismatch between the first battery cell group 200a and the second battery cell group 200b and increasing the overall energy density of the battery 10.

It should be noted that in this embodiment of this application, the attachment between the first battery cell group 200a and the second battery cell group 200b may be direct attachment or indirect attachment. In the case of direct attachment, a wall of the first battery cell 20a in the first battery cell group 200a may be directly attached to a wall of the second battery cell 20b in the second battery cell group 200b. In the case of indirect attachment, a wall of the first battery cell 20a in the first battery cell group 200a may be attached to a wall of the second battery cell 20b in the second battery cell group 200b through an intermediate member including but not limited to an adhesive layer or a support.

In an example, as shown in FIG. 4, when the volumetric energy density of the first battery cell 20a is greater than the volumetric energy density of the second battery cell 20b, the first battery cell group 200a includes two first battery cells 20a and the second battery cell group 200b includes one second battery cell 20b. In the first direction x, a sum of the sizes of two first battery cells 20a may be the same as or approximate to the size of one second battery cell 20b.

Optionally, the first direction x may be parallel to a length direction of the first battery cells 20a, and the at least one first battery cell 20a in the first battery cell group 200a may be arranged in the length direction.

It should be noted that, in three-dimensional space, the size of the first battery cell 20a with a polyhedron structure such as a hexahedral structure, in its length direction is larger than sizes of the first battery cell 20a in other directions; in other words, the direction with the largest size in the first battery cell 20a is its length direction.

Therefore, in this implementation, the first battery cell 20a may have the longest length and a wall with a relatively large area in the first direction x. When the first battery cell 20a is attached to the second battery cell 20b or other members in the box 100 through the wall with the relatively large area, the attachment reliability between the first battery cell group 200a and the second battery cell group 200b or other members can be improved, thereby improving the stability of installation of the first battery cell group 200a in the box 100.

Optionally, the first direction x may be parallel to a length direction of the second battery cell 20b. In the case that the second battery cell group 200b includes a plurality of second battery cells 20b, the plurality of second battery cells 20b may also be arranged in the length direction thereof.

Similarly, for the length direction of the second battery cell 20b, reference may be made to the related descriptions of the length direction of the first battery cell 20a above. In this case, the second battery cell group 200b may have the longest length and a wall with a relatively large area in the first direction x, so that the wall with the relatively large area may be fully used for mutual attachment with at least one first battery cell 20a of the first battery cell group 200a or other members in the box 100, to improve the stability of installation of the second battery cell group 200b in the box 100.

Certainly, in other alternative implementations, the first direction x may not be parallel to the length direction of the first battery cell 20a and/or the second battery cell 20b, and the first battery cell group 200a and the second battery cell group 200b may be mutually attached. For example, the first direction x is perpendicular to the length direction of the first battery cell 20a and/or the length direction of the second battery cell 20b.

Still referring to FIG. 4, in this embodiment of this application, the first battery cell group 200a and the second battery cell group 200b are arranged in the second direction y. Optionally, in some implementations, the second direction y may be parallel to the thickness direction of the first battery cell 20a and/or the second direction y may be parallel to the thickness direction of the second battery cell 20b.

It should be noted that, in three-dimensional space, the size of the first battery cell 20a with a polyhedron structure such as a hexahedral structure, in its length direction is less than sizes of the first battery cell 20a in other directions. In other words, the direction with the smallest size in the first battery cell 20a is its thickness direction. Similarly, the direction with the smallest size of the second battery cell 20b is its thickness direction.

Based on the technical solution in this embodiment, a space occupied by the first battery cell 20a and/or the second battery cell 20b in its thickness direction is relatively small, and mutual arrangement of the first battery cell group 200a and the second battery cell group 200b may be conveniently implemented by taking advantage of the thickness direction of the first battery cell 20a and/or the second battery cell 20b, and more first battery cell groups 200a and second battery cell groups 200b can be conveniently mutually attached in the thickness direction.

In addition, as shown in FIG. 4, under the condition that the second direction y is parallel to the thickness direction of the first battery cell 20a, a wall facing the second direction y in the first battery cell 20a is a wall with the largest area in the first battery cell 20a. Similarly, under the condition that the second direction y is parallel to the thickness direction of the second battery cell 20b, a wall facing the second direction y in the second battery cell 20b is a wall with the largest area in the second battery cell 20b. Therefore, the wall with the largest area in the first battery cell 20a and/or the second battery cell 20b can be used for the attachment between the first battery cell group 200a and the second battery cell group 200b, improving the attachment stability therebetween to the greatest extent.

The first battery cells 20a and the second battery cells 20b shown in FIG. 4 may be referred to as blade battery cells or blade jelly rolls. A plurality of blade battery cells can be easily interconnected in their thickness direction and used as a battery cell group directly installed in the box 100 of the battery 10.

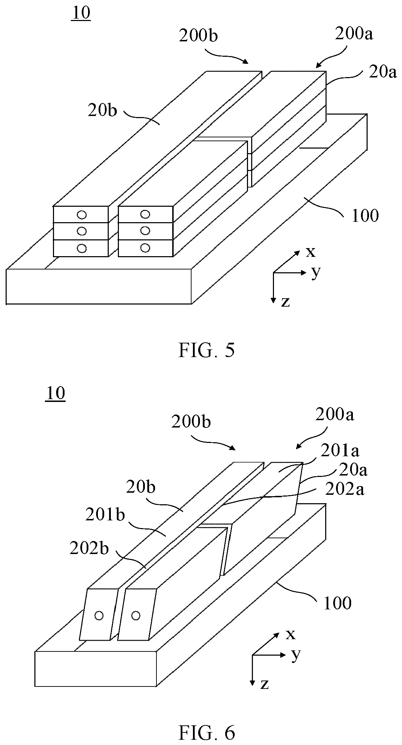

FIG. 5 shows a schematic structural diagram of another battery 10 according to an embodiment of this application.

As shown in FIG. 5, in this embodiment of this application, the third direction z perpendicular to the first direction x and the second direction y is parallel to the thickness direction of the first battery cell 20a, and/or the third direction z perpendicular to the first direction x and the second direction y is parallel to the thickness direction of the second battery cell 20b.

In this embodiment, under the condition that the third direction z is parallel to the thickness direction of the first battery cell 20a, a wall facing the third direction z in the first battery cell 20a is a wall with the largest area in the first battery cell 20a, while a wall facing the second direction y in the first battery cell 20a is smaller than the wall with the largest area. Similarly, under the condition that the third direction z is parallel to the thickness direction of the second battery cell 20b, a wall facing the second direction y in the second battery cell 20b is smaller than a wall with the largest area in the second battery cell 20b.

High-pressure gas and heat are generated inside the first battery cell 20a and the second battery cell 20b in continuous operation, and most of the heat is transferred through the wall with the largest area. Based on this technical solution, the first battery cell 20a and the second battery cell 20b are not mutually attached through their walls at largest area, so that a small amount of heat is transferred between the first battery cell 20a and the second battery cell 20b. When thermal runaway occurs in any one of the first battery cell 20a and the second battery cell 20b, only a small amount of heat is transferred to the other battery cell, having little influence on the other battery cell and thereby improving safety performance of the battery 10.

Optionally, as shown in FIG. 5, the battery 10 may include a plurality of first battery cell groups 200a arranged in the third direction z, and/or a plurality of second battery cell groups 200b arranged in the third direction z.

Because the third direction z may be parallel to the thickness direction of the first battery cell 20a, the arrangement of the plurality of first battery cell groups 200a in the thickness direction can be implemented by taking advantage of the thickness direction of the first battery cell 20a. Similarly, and/or because the third direction z may be parallel to the thickness direction of the second battery cells 20b, the arrangement of a plurality of second battery cell groups 200b in the thickness direction can be implemented by taking advantage of the thickness direction of the second battery cells 20b.

Optionally, in the embodiments shown in FIG. 4 to FIG. 5 above, the third direction z may be parallel to the direction of gravity, and the first direction x and the second direction y may both be parallel to the horizontal direction. In this case, the at least one first battery cell 20a in the first battery cell group 200a and the at least one second battery cell 20b in the second battery cell group 200b can be arranged on a horizontal plane, which can enhance the stability of the first battery cell group 200a and the second battery cell group 200b in the battery 10.

In addition, under the condition that the third direction z is parallel to the direction of gravity, in the embodiments shown in FIG. 4 to FIG. 5, the first battery cell 20a and the second battery cell 20b are conventional prismatic battery cells. Adjacent walls of the first battery cell 20a and the second battery cell 20b are disposed parallel to the direction of gravity and mutually attached. In this way, the first battery cell 20a and the second battery cell 20b can be connected into a whole by using a structural adhesive, but there are no interaction forces between the first battery cell 20a and the second battery cell 20b in the direction of gravity. If the battery 10 is impacted by an external force in the direction of gravity, the connection between the first battery cell 20a and the second battery cell 20b may be affected by the impact, which then also affects the overall stiffness and the stiffness of the battery 10.

In view of this, the application provides a technical solution in which the first battery cell 20a and/or the second battery cell 20b are designed as other polyhedral battery cells different from the conventional prismatic battery cells. Specifically, the first battery cell 20a includes a first wall 201a and a second wall 202a that are interconnected, and the second battery cell 20b includes a second wall 201b and a second wall 202b that are interconnected. The first wall 201a of the first battery cell 20a and/or the first wall 201b of the second battery cell 20b are both perpendicular to the direction of gravity, and the second wall 202a of the first battery cell 20a and/or the second wall 202b of the second battery cell 20b are inclined with respect to the direction of gravity. The second wall 202a of the at least one first battery cell 20a in the first battery cell group 200a is configured for attachment to the second wall 202b of at least one second battery cell 20b in the second battery cell group 200b.

Taking the first battery cell 20a as an example, the first wall 201a and the second wall 202a of the first battery cell 20a are interconnected to form a wedge-shaped structure. Specifically, the included angle between the first wall 201a and the second wall 202a may be acute to form a wedge-shaped structure with an acute vertex angle.

Alternatively, optionally, the included angle between the first wall 201a and the second wall 202a of the first battery cell 20a may alternatively be an obtuse angle. In that case, it can also be understood that a wedge structure with an obtuse vertex angle is formed between the first wall 201a and the second wall 202a.

Similarly, for the shapes of the first wall 201b and the second wall 202b in the second battery cell 20b, reference may be made to the related descriptions of the first battery cell 20a above.

Optionally, for the first battery cell 20a and the second battery cell 20b, the first wall and the second wall may be the housing 211, the first cover plate 212a, or the second cover plate 212b in the battery cell 20 of the embodiment shown in FIG. 3.

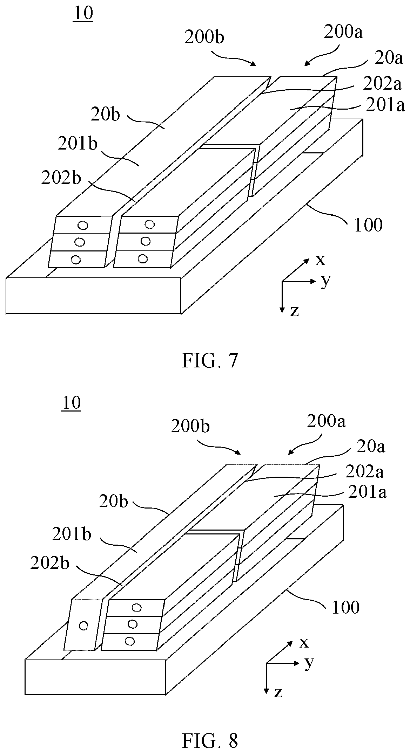

FIG. 6 and FIG. 7 show schematic structural diagrams of other two types of batteries 10 according to embodiments of this application.

Optionally, in the embodiments shown in FIG. 6 and FIG. 7, the first battery cell 20a and the second battery cell 20b may have same sizes in other directions except the size in the length direction. In the following, the first battery cell 20a is used as an example to describe a related design of the first wall 201a and the second wall 202a of the first battery cell 20a. For a related design of the first wall 201b and the second wall 202b of the second battery cell 20b, reference may be made to the related descriptions of the first battery cell 20a below, and details are not described here.

As shown in FIG. 6 and FIG. 7, the third direction z is parallel to the direction of gravity. In the first battery cell 20a, the first wall 201a is perpendicular to the third direction z, and the second wall 202a is inclined with respect to the third direction z. Specifically, as shown in FIG. 6, the second wall 202a is the wall with the largest area in the first battery cell 20a. As shown in FIG. 7, the first wall 201a is the wall with the largest area in the first battery cell 20a.

In addition, as shown in FIG. 6 and FIG. 7, the second direction y is perpendicular to the third direction z, to be specific, the second direction y is perpendicular to the direction of gravity and parallel to the horizontal direction. In the box 100 of the battery 10, the first battery cell 20a and the second battery cell 20b are arranged in the second direction y, and the first battery cell 20a and the second battery cell 20b that are adjacent are mutually attached through the second wall 202a and second wall 202b that are adjacent, so that interaction forces in the third direction z are formed between the second wall 202a and the second wall 202b that are adjacent.

Based on the technical solution in this embodiment of this application, in the first battery cell group 200a and the second battery cell group 200b arranged in the second direction y, the second wall 202a and the second wall 202b of the first battery cells 20a and the second battery cells 20b that are adjacent are mutually attached and inclined with respect to the direction of gravity. In this way, interaction forces parallel to the direction of gravity are formed between the adjacent second walls 202a and the second wall 202b, resulting in interaction forces formed between the adjacent first battery cell 20a and the second battery cell 20b to cause the first battery cell 20a and the second battery cell 20b to be mutually restrained and restricted, thereby enhancing the overall stiffness and strength of the battery 10 and reducing the potential safety hazards caused by vibration and impact of the battery 10 during use. Further, compared with a wall in the vertical direction, areas of the inclined second wall 202a and second wall 202b of the first battery cell 20a and the second battery cell 20b are larger than an area of the vertically disposed wall. In this way, the second wall 202a of the first battery cell 20a and the second wall 202b of the second battery cell 20b may be coated with a relatively large area of structural adhesive, and the stability and overall stiffness and strength of the battery 10 may be further enhanced.

In addition, in the embodiment shown in FIG. 6, the second wall 202a of the first battery cell 20a and the second wall 202b of the second battery cell 20b may be a wall with a largest area in the first battery cell 20a and a wall with a largest area in the second battery cell 20b, respectively, and the largest second wall 202a and the largest second wall 202b can be used for implementing attachment between the first battery cell 20a and the second battery cell 20b that are adjacent to the greatest extent, which improves the interaction force between the first battery cell 20a and the second battery cell 20b that are adjacent, thereby enhancing stability and overall stiffness and strength of the battery 10.

In the embodiment shown in FIG. 7, a plurality of first battery cells 20a and a plurality of second battery cells 20b are stacked in the third direction z. In the third direction z, adjacent first battery cells 20a are mutually attached through adjacent first walls 201a, and adjacent second battery cells 20b are mutually attached through adjacent first walls 201b. The first wall 201a of the first battery cell 20a is a wall with a largest area in the first battery cell 20a, and the first wall 201b of the second battery cell 20b is a wall with a largest area in the second battery cell 20b. Therefore, the first wall 201a with the largest area in the first battery cell 20a can be used for implementing stable arrangement of a plurality of first battery cells 20a in the third direction z, and the first wall 201b with the largest area in the second battery cell 20b can be used for implementing stable arrangement of a plurality of second battery cells 20b in the third direction z.

It should be noted that in the embodiments shown in FIG. 6 and FIG. 7, the respective largest walls in the first battery cell 20a and the second battery cell 20b all face a same direction. Optionally, in other embodiments, the respective largest walls in the first battery cell 20a and the second battery cell 20b may alternatively face different directions.

FIG. 8 shows a schematic structural diagram of another battery 10 according to an embodiment of this application.

As shown in FIG. 8, in the first battery cell 20a, the wall with the largest area is the first wall 201a facing the third direction z, and in the second battery cell 20b, the wall with the largest area faces the second wall 202b in the second direction y.

High-pressure gas and heat are generated inside the first battery cell 20a and the second battery cell 20b in continuous operation. The high-pressure gas causes the first battery cell 20a and the second battery cell 20b to swell, imposing great stress on the first wall 201a with a larger area in the first battery cell 20a and the second wall 202b with a larger area in the second battery cell 20b, and most of the heat inside the first battery cell 20a and the second battery cell 20b is transferred also through the walls with a large area. Based on the technical solution in this embodiment of this application, the stress and heat generated by the first battery cell 20a are transferred in a different direction from the stress and heat generated by the second battery cell 20b so as to prevent the accumulation of stress in the same direction from affecting the strength and stiffness of the battery 10 in that direction, and also to prevent the continuous transfer of heat in the same direction from affecting the normal operation of a plurality of battery cells, thereby enhancing the overall stiffness and strength of the battery 10 and improving the safety performance of the battery 10 in the electric apparatus.

It can be understood that in other implementations, the wall with the largest area in the first battery cell 20a may be the second wall 202a facing the second direction y, while the wall with the largest area in the second battery cell 20b is the first wall 201a facing the third direction z, which can also achieve the technical effects produced by the embodiment shown in FIG. 8.

Optionally, in the implementations shown in FIG. 4 and FIG. 5 above, the first battery cell 20a may include two first walls 201a disposed in parallel and two second walls 202a disposed in parallel, where the first battery cell 20a has a rectangular cross section on a plane (the yz plane shown in the figures) perpendicular to its first wall 201a and second wall 202a. In this implementation, the first battery cell 20a has a regular and symmetrical structure, which facilitates the manufacture and installation of the first battery cell 20a. Similarly, in the implementations shown in FIG. 4 and FIG. 5, the second battery cell 20b may also have a rectangular cross section on a plane perpendicular to its first wall 201b and second wall 202b.

Optionally, in the implementations shown in FIG. 6 to FIG. 8 above, the first battery cell 20a may include two first walls 201a disposed in parallel and two second walls 202a disposed in parallel, where the first battery cell 20a has a parallelogram cross section on a plane (the yz plane shown in the figures) perpendicular to the first wall 201a and second wall 202a. In this implementation, the first battery cell 20a has the two inclined second walls 202a and also has a more regular overall structure, which facilitates the mutual attachment of the plurality of first battery cells 20a so as to form a more regular first battery cell group 200a. Similarly, in the embodiments shown in FIG. 6 to FIG. 8, the second battery cell 20b may also have a parallelogram cross section on a plane perpendicular to its first wall 201b and second wall 202b.

Optionally, in some other implementations, the first battery cell 20a may include two first walls 201a disposed in parallel and two second walls 202a disposed in non-parallel, where the first battery cell 20a has a trapezoid cross section on a plane perpendicular to the first walls 201a and the second walls 202a, and the two non-parallel second walls 202a form the waist of the trapezoid cross section. Based on these implementations, the first battery cell 20a may likewise have two inclined second walls 202a. Similarly, the second battery cell 20b may alternatively have a trapezoid cross section on a plane perpendicular to its first wall 201b and second wall 202b.

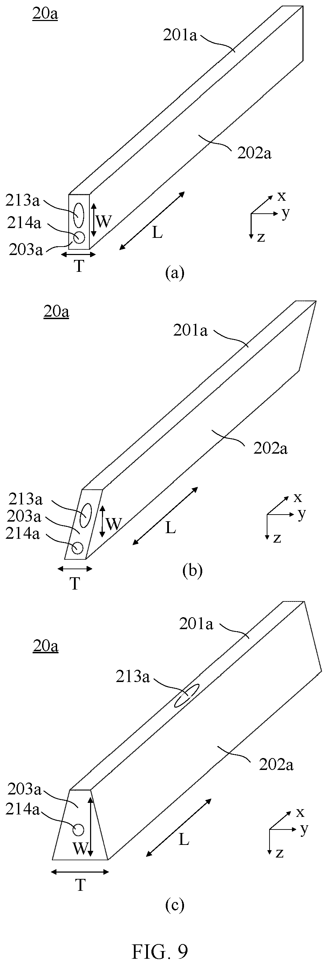

FIG. 9 shows three-dimensional schematic views of three types of first battery cells 20a according to an embodiment of this application. (a) of FIG. 9 may be a three-dimensional schematic view of the first battery cell 20a in FIG. 4, and (b) of FIG. 9 may be a three-dimensional schematic view of the first battery cell 20a in FIG. 6.

Optionally, as shown in FIG. 9, the first battery cell 20a may be a hexahedral structure, and the first battery cell 20a may include two first walls 201a disposed opposite each other, two second walls 202a disposed opposite each other, and two third walls 203a disposed opposite each other and connected to the first walls 201a and the second walls 202a.

Optionally, in the embodiment shown in FIG. 9, the third wall 203a may be perpendicular to the first wall 201a and the second wall 202a, such that the third wall 203a has the same shape as the cross section of the first battery cell 20a on a plane perpendicular to the first walls 201a and the second walls 202a. For example, the shape of the third wall 203a may be rectangular, as shown in (a) of FIG. 9, or the shape of the third wall 203a may be parallelogram, as shown in (b) of FIG. 9, or the shape of the third wall 203a may be trapezoid, as shown in (c) in FIG. 9.

Certainly, the third wall 203a may alternatively not be perpendicular to the first wall 201a and the second wall 202a. In this case, the shape of the third wall 203a may also be presented as parallelogram or trapezoid. Specific arrangement of the third wall 203a is not limited in this embodiment of this application.

Optionally, in the embodiment shown in FIG. 9, both the first wall 201a and the second wall 202a extend in the length direction L of the first battery cell 20a, where the length direction L of the first battery cell 20a is parallel to the first direction x shown in FIG. 9.

Optionally, in the embodiment shown in FIG. 9, in order to implement arrangement of at least one first battery cell 20a in the second direction y, the thickness direction T of the second battery cells 20b may be parallel to the second direction y.

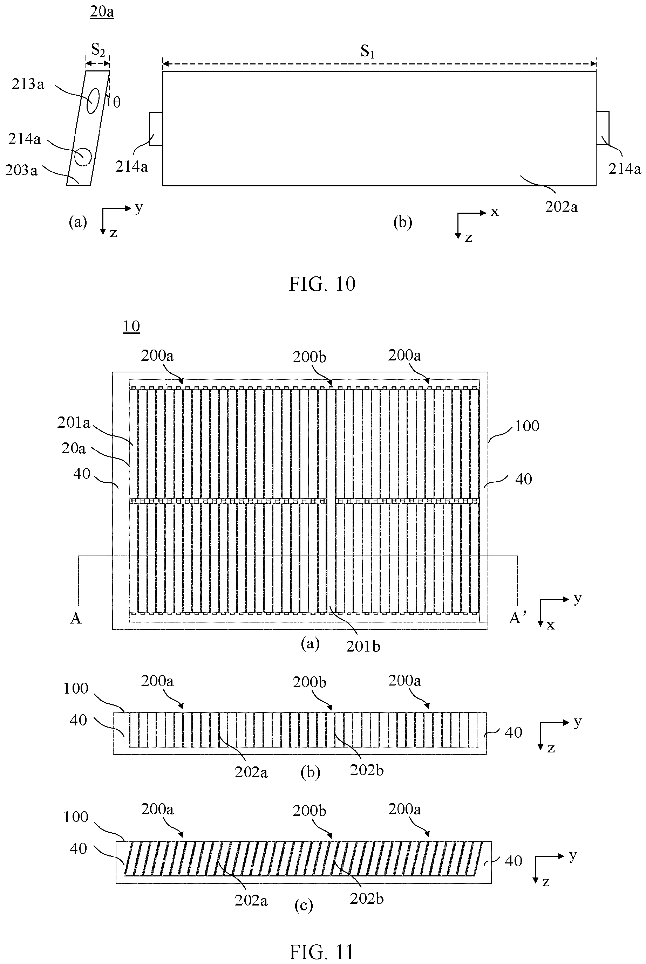

(a) of FIG. 10 is a front view of the first battery cell 20a shown in (b) of FIG. 9, and (b) of FIG. 10 is a side view of the first battery cell 20a shown in (b) of FIG. 9.

Optionally, as shown in FIG. 10, a first size of the first battery cell 20a in its length direction L may be represented by S 1 and a second size in its thickness direction T may be represented by S2.

As an example, rather than a limitation, the first size S 1 may be in a range satisfying 100 mm ≤ S 1 ≤ 1400 mm. Further, the first size S 1 may be in a range satisfying 300 mm ≤ S1 ≤ 1200 mm.

As an example, rather than a limitation, the second size S2 may be in a range satisfying 5 mm ≤ S2 ≤ 80 mm. Further, the second size S2 may be in a range satisfying 5 mm ≤ S2 ≤ 30 mm.

Optionally, as shown in FIG. 10, in the first battery cell 20a, the included angle between the second wall 202a and the third direction z may be represented by θ.

As an example, rather than a limitation, the included angle θ between the second wall 202a and the third direction z may be in a range satisfying 0° < θ ≤ 60°. Further, the included angle θ between the second wall 202a and the third direction z may be in a range satisfying 0° < θ ≤ 10°.

Based on the technical solution of this embodiment of this application, controlling the included angle θ between the second wall 202a and the third direction z can achieve a balance between the space occupied by the first battery cell 20a and the stability of the first battery cell 20a. With a smaller included angle θ, the lateral space occupied by the first battery cell 20a can be relatively decreased while the stability of installation of the first battery cell 20a is ensured, thereby increasing the energy density of the battery 10.

Still referring to FIG. 9 and FIG. 10, in the first battery cell 20a, its third wall 203a may be correspondingly located at an end of the first battery cell 20a in the length direction L and connected to the first wall 201a and the second wall 202a.

Optionally, the first battery cell 20a may further include an electrode terminal 214a disposed on the third wall 203a. For a specific solution of the electrode terminal 214a, reference may be made to the technical solution related to the electrode terminal 214 in the embodiment shown in FIG. 3 above, and details are not repeated herein.

In an example, as shown in FIG. 9 and FIG. 10, two electrode terminals 214a may be disposed on two sides of the first battery cell 20a in the length direction L of the first battery cell 20a, to be specific, the two electrode terminals 214a may be disposed at two third walls 203a of the first battery cell 20a, respectively. In another example, the two electrode terminals 214a may alternatively be disposed on a same side of the first battery cell 20a in the length direction L of the first battery cell 20a, to be specific, the two electrode terminals 214a may be disposed at a same third wall 203a of the first battery cell 20a.

Based on the technical solution in this embodiment of this application, the electrode terminals 214a of the first battery cell 20a are disposed on the third wall 203a at the end of the first battery cell 20a in the length direction L of the first battery cell 20a, without affecting attachment of the first wall 201a and the second wall 202a of the first battery cell 20a to other members, where the first wall 201a and the second wall 202a extend in the length direction of the first battery cell 20a and have a larger area. This ensures better stability of the first battery cell 20a. In addition, based on actual design requirements, the electrode terminals 214a may be disposed on a same end or different ends of the first battery cell 20a in the length direction, so that the first battery cell 20a can be flexibly applied to various electrical environments.

Optionally, still referring to FIG. 9 and FIG. 10, the first battery cell 20a may further include a pressure relief mechanism 213a, where the pressure relief mechanism 213a may be disposed on a wall other than the second wall 202a in the first battery cell 20a, to be specific, the first wall 201a or the third wall 203a.

For example, in the implementations shown in (a) and (b) of FIG. 9, the pressure relief mechanism 213a is disposed on the third wall 203a located at the end of the first battery cell 20a in the length direction L. Optionally, the pressure relief mechanism 213a may be disposed on the same third wall 203 as the electrode terminals 214a, for example, the pressure relief mechanism 213a may be disposed on a side of one electrode terminal 214a.

Alternatively, in the implementation shown in (c) of FIG. 9, the pressure relief mechanism 213a is disposed on the first wall 201a located at the top or bottom of the first battery cell 20a. In this implementation, the first battery cell 20a is connected to another battery cell through the second wall 202a, and the pressure relief mechanism 213a and the electrode terminals 214a are located at different walls of the first battery cell 20a, which can prevent the pressure relief mechanism 213a in releasing emissions inside the battery cell from affecting the electrode terminals 214a, thereby enhancing the safety performance of the first battery cell 20a.

It should be noted that the position of the pressure relief mechanism 213a in each of the figures of FIG. 9 is used only as an example rather than a limitation, and in (a) and (b) of FIG. 9, the pressure relief mechanism 213a may alternatively be disposed on the first wall 201a located on the top or bottom surface of the first battery cell 20a. In (c) of FIG. 9, the pressure relief mechanism 213a may alternatively be disposed on the third wall 203a located at an end surface of the first battery cell 20a.

It can be understood that in the embodiments shown in FIG. 9 and FIG. 10 above, the thickness direction T of the first battery cell 20a is parallel to the second direction y, and the width direction W of the first battery cell 20a is parallel to the third direction z. The size of the first battery cell 20a in the thickness direction T is less than the size of the first battery cell 20a in the width direction W, that is, the size of the first battery cell 20a in the second direction y is less than the size of the first battery cell 20a in the third direction z.

For the shape and sizes of the first battery cell 20a, in addition to the embodiments shown in FIG. 9 and FIG. 10 above, in another implementation, the length direction L of the first battery cell 20a can still be parallel to the first direction x, while the thickness direction T of the first battery cell 20a is parallel to the third direction z, and the width direction W of the first battery cell 20a is parallel to the second direction y. In this case, the size of the first battery cell 20a in the thickness direction T is less than the size of the first battery cell 20a in the width direction W, that is, the size of the first battery cell 20a in the third direction z is less than the size of the first battery cell 20a in the second direction y. In this implementation, for the first battery cell 20a, reference may be made to the embodiments shown in FIG. 5 and FIG. 7 above.

Optionally, in this implementation, for the sizes of the first battery cell 20a in the thickness direction T and the length direction L, as well as the related technical solutions of the electrode terminals 214a and the pressure relief mechanism 213a in the first battery cell 20a, reference may be made to the related descriptions of the embodiments shown in FIG. 9 and FIG. 10 above, and details are not repeated herein.

In addition, in this embodiment of this application, the shape of the second battery cell 20b may be the same as the shape of the first battery cell 20a, and the only difference is that the sizes of the second battery cell 20b in the directions may be different from the sizes of the first battery cell 20a. For example, in some implementations, the sizes of the second battery cell 20b in the second direction y and the third direction z may be equal to the sizes of the first battery cell 20a in the second direction y and the third direction z, respectively, while the size of the second battery cell 20b in the first direction x is not equal to the size of the first battery cell 20a in the first direction x. For another example, in some other implementations, the size of the second battery cell 20b in the second direction y may be equal to the size of the first battery cell 20a in the third direction z, and the size of the second battery cell 20b in the third direction z may be equal to the size of the first battery cell 20a in the second direction y, while the size of the second battery cell 20b in the first direction x is not equal to the size of the first battery cell 20a in the first direction x.

Optionally, based on the technical solutions in the embodiments shown above, the battery 10 may further include at least one first battery cell group 200a arranged in the second direction y and at least one second battery cell group 200b arranged in the second direction y. Under the condition that the volumetric energy density of the first battery cell 20a is greater than the volumetric energy density of the second battery cell 20b, the size of the first battery cell 20a in the first direction x may be less than the size of the second battery cell 20b in the first direction x.

FIG. 11 shows a schematic top view and several cross-sectional views of a battery 10 according to an embodiment of this application. (a) of FIG. 11 shows a schematic top view of the battery 10, (b) of FIG. 11 shows a schematic cross-sectional view of the battery 10 along direction A-A' in (a), and (c) of FIG. 11 shows another schematic cross-sectional view of the battery 10 along direction A-A' in (a).

As shown in FIG. 11, the battery 10 may include a plurality of first battery cell groups 200a and one second battery cell group 200b that are arranged in the second direction y, where the one second battery cell group 200b is disposed between adjacent two first battery cell groups 200a. In an example, each of the plurality of first battery cell groups 200a shown in FIG. 11 includes two first battery cells 20a arranged in the first direction x, and the second battery cell group 200b includes one second battery cell 20b, where the size of the one second battery cell 20b in the first direction x is the same as the sizes of the two first battery cells 20a in the first direction x.

Based on this implementation, because the second battery cell 20b has a larger size in the first direction x than the first battery cell 20a, the second battery cell 20b can have higher strength and stiffness in the first direction x, and the second battery cell group 200b disposed between the first battery cell groups 200a may function as a beam, thereby enhancing the overall strength and stiffness of the battery 10.

In addition, in the embodiment shown in FIG. 11, the thickness direction of the first battery cells 20a is parallel to the second direction y, the second wall 202a of the first battery cell 20a facing the second direction y may be the wall with the largest area, and adjacent two first battery cells 20a in the second direction y can be mutually attached through second walls 202a with the largest area thereof. Similarly, the thickness direction of the second battery cell 20b may also be parallel to the second direction y, and the second wall 202b of the second battery cell 20b facing the second direction y may be the wall with the largest area. In the second direction y, the second battery cell 20b may be attached to the second wall 202a of the first battery cell 20a adjacent thereto through its second wall 202b with the largest area.

Therefore, in the technical solution in this implementation, a plurality of battery cells (including the first battery cell 20a and the second battery cell 20b) can be mutually attached through the walls with the largest area in the plurality of battery cells, which not only facilitates the connection and installation of the plurality of battery cells, but also facilitates the improvement of the stability of installation of the plurality of battery cells in the box 100.

It can be understood that on the basis of the embodiment shown in FIG. 11, the battery 10 may further include a plurality of second battery cell groups 200b arranged in the second direction y. Optionally, the plurality of second battery cell groups 200b may be interposed between a plurality of first battery cell groups 200a. Alternatively, the plurality of second battery cell groups 200b may be mutually attached to form a whole, and the whole formed by the plurality of second battery cell groups 200b may be disposed between adjacent two first battery cell groups 200a. Based on the technical solution in this implementation, the battery 10 can include more second battery cell groups 200b, which can further enhance the overall strength and stiffness of the battery 10.

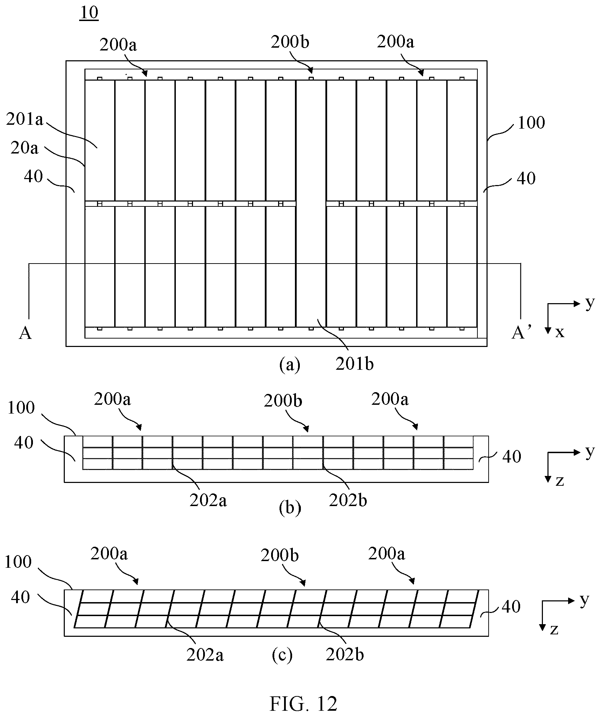

FIG. 12 shows a schematic top view and several cross-sectional views of a battery 10 according to an embodiment of this application. (a) of FIG. 12 shows a schematic top view of the battery 10, (b) of FIG. 12 shows a schematic cross-sectional view of the battery 10 along direction A-A' in (a), and (c) of FIG. 12 shows another schematic cross-sectional view of the battery 10 along direction A-A' in (a).

As shown in FIG. 12, the battery 10 may include a plurality of columns of battery cell groups 200a and one column of second battery cell groups 200b in a second direction y, where the one second battery cell group 200b is disposed between adjacent two first battery cell groups 200a. In an example, in the plurality of columns of first battery cell groups 200a shown in FIG. 12, each column of first battery cell groups 200a includes a plurality of first battery cell groups 200a arranged in the third direction z, and each first battery cell group 200a includes a plurality of first battery cells 20a arranged in the second direction y. Similarly, the second battery cell group 200b includes a plurality of second battery cell groups 200b arranged in the third direction z, and each second battery cell group 200b includes one second battery cell 20b, where the size of the one second battery cell 20b in the first direction x is the same as the sizes of two first battery cells 20a in the first direction x.

Based on this implementation, one column of second battery cell groups 200b disposed between adjacent two columns of first battery cell groups 200a can also function as a beam, thereby enhancing the overall strength and stiffness of the battery 10.

In addition, as shown in FIG. 12, in the battery 10, the thickness direction of the first battery cell 20a is parallel to the third direction z, and the first wall 201a of the first battery cell 20a facing the third direction z may be the wall with the largest area. Therefore, each column of first battery cell group 200a arranged in the third direction z may have high stability. Similarly, the thickness direction of the second battery cell 20b is parallel to the third direction z, and the first wall 201b of the second battery cell 20b facing the third direction z may be the wall with the largest area. Therefore, one column of second battery cell groups 200b arranged in the third direction z may also have high stability.

Further, because the first walls with the largest area in the first battery cell 20a and the plurality of second battery cells 20b face the third direction z, most of the heat in each column of battery cell group is transferred in each column of battery cell group through the first walls with the largest area and less heat is transferred between adjacent two column of battery cell groups, thus improving the overall safety performance of the battery 10.

Optionally, on the basis of the embodiment shown in FIG. 12, the battery 10 may further include a plurality of columns of second battery cell groups 200b arranged in the second direction y. Optionally, the plurality of columns of second battery cell groups 200b may be interposed between a plurality of columns of first battery cell groups 200a. Alternatively, the plurality of columns of second battery cell groups 200b may be mutually attached to form a whole, and the whole formed by the plurality of columns of second battery cell groups 200b may be disposed between two columns of first battery cell groups 200a.

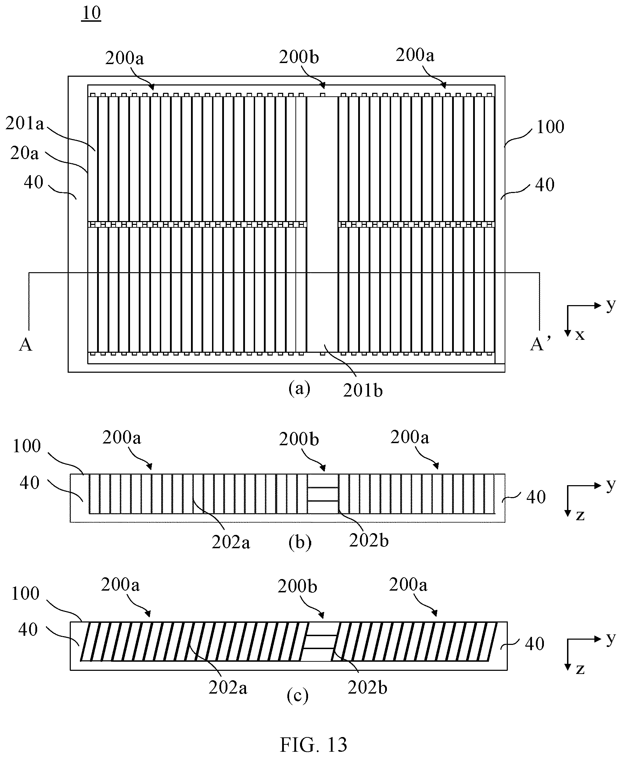

FIG. 13 is a schematic top view and several cross-sectional views of a battery 10 according to an embodiment of this application. (a) of FIG. 13 shows a schematic top view of the battery 10, (b) of FIG. 13 shows a schematic cross-sectional view of the battery 10 along direction A-A' in (a), and (c) of FIG. 13 shows another schematic cross-sectional view of the battery 10 along direction A-A' in (a).

As shown in FIG. 13, the battery 10 includes a plurality of first battery cell groups 200a and one column of second battery cell groups 200b that are arranged in the second direction y, where the one second battery cell group 200b is disposed between adjacent two first battery cell groups 200a. In an example, each of the plurality of first battery cell groups 200a shown in FIG. 13 includes two first battery cells 20a arranged in the first direction x. The one column of second battery cell groups 200b includes a plurality of second battery cell groups 200b arranged in the third direction z, and each second battery cell group 200b includes one second battery cell 20b, where the size of the one second battery cell 20b in the first direction x is the same as the sizes of two first battery cells 20a in the first direction x.

Specifically, as shown in FIG. 13, in the battery 10, the thickness direction of the first battery cell 20a is parallel to the second direction y, the second wall 202a of the first battery cell 20a facing the second direction y may be the wall with the largest area, and adjacent two first battery cells 20a in the second direction y can be mutually attached through second walls 202a with the largest area thereof. The thickness direction of the second battery cells 20b is parallel to the third direction z. The first wall 201b of the second battery cell 20b facing the third direction z may be the wall with the largest area. In the one column of second battery cell groups 200b, a plurality of second battery cells 20b are mutually attached through first walls 201b with the largest area thereof to ensure the stability of the one column of second battery cell groups 200b in the third direction z.

High-pressure gas and heat are generated inside the first battery cell 20a and the second battery cell 20b in continuous operation. The high-pressure gas causes the first battery cell 20a and the second battery cell 20b to swell, imposing great stress on the second wall 202a with a large area in the first battery cell 20a and the first wall 201b with a large area in the second battery cell 20b, and most of the heat inside the first battery cell 20a and the second battery cell 20b is transferred also through the walls with a large area. Based on the technical solution in this embodiment of this application, the stress and heat generated by the first battery cell group 200a may be transferred in a different direction from the stress and heat generated by the second battery cell group 200b so as to prevent the accumulation of stress in the same direction from affecting the strength and stiffness of the battery 10 in that direction, and also to prevent the continuous transfer of heat in the same direction from affecting normal operation of a plurality of battery cells, thereby enhancing the overall stiffness and strength of the battery 10 and improving the safety performance of the battery 10 in the electric apparatus.

In addition, the second battery cell group 200b may serve as a beam located between two first battery cell groups 200a and can form a support in the second direction y for the first battery cell groups 200a on two sides of the second battery cell group 200b, and experience the stress accumulated in the second direction y by the second walls 202a of the first battery cells 20a in the first battery cell group 200a, enhancing the overall stiffness and strength of the battery 10 in the second direction y.

Optionally, on the basis of the embodiment shown in FIG. 13, the battery 10 may further include a plurality of columns of second battery cell groups 200b arranged in the second direction y. Optionally, the plurality of columns of second battery cell groups 200b may be interposed between a plurality of first battery cell groups 200a. Alternatively, the plurality of columns of second battery cell groups 200b may be mutually attached to form a whole, and the whole formed by the plurality of columns of second battery cell groups 200b may be disposed between two first battery cell groups 200a.

In the embodiments shown in FIG. 11 to FIG. 13 above, at least one second battery cell group 200b may be located between adjacent two first battery cell groups 200a, serving as a beam and enhancing the overall strength and stiffness of the battery 10. In some other implementations, the at least one second battery cell group 200b may alternatively be disposed on at least one end of a whole formed by the plurality of first battery cell groups 200a.

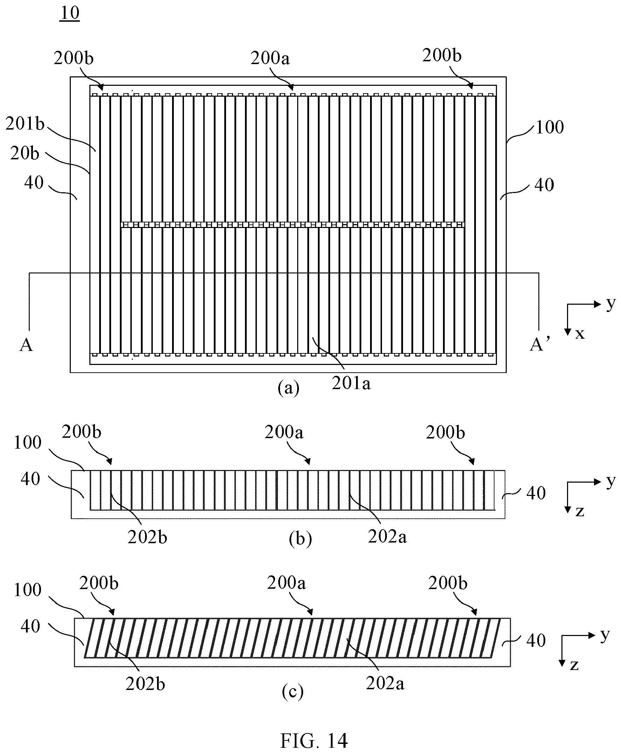

FIG. 14 is a schematic top view and several cross-sectional views of a battery 10 according to an embodiment of this application. (a) of FIG. 14 shows a schematic top view of the battery 10, (b) of FIG. 14 shows a schematic cross-sectional view of the battery 10 along direction A-A' in (a), and (c) of FIG. 14 shows another schematic cross-sectional view of the battery 10 along direction A-A' in (a).

As shown in FIG. 14, the battery 10 may include two second battery cell groups 200b. In the second direction y, the two second battery cell groups 200b are disposed on two ends of a whole formed by the plurality of first battery cell groups 200a, respectively.

Alternatively, in some other implementations, the battery 10 may include only one second battery cell group 200b, which may be disposed on one end of a whole formed by a plurality of first battery cell groups 200a.

Still alternatively, in some other implementations, the battery 10 may include a plurality of second battery cell groups 200b. The plurality of second battery cell groups 200b may be arranged in the second direction y and mutually attached, and disposed on one end of a whole formed by the plurality of first battery cell groups 200a.

Based on the technical solutions in the implementations, the second battery cell groups 200b disposed on at least one end of a whole formed by the first battery cell groups 200a may serve as a busbar for the first battery cell groups 200a in the first direction x. Specifically, if two electrode terminals 214a of each first battery cell 20a in the first battery cell group 200a are disposed on a same wall. For example, in the embodiment shown in (a) of FIG. 14, in the first direction x, an electrode terminal 214a of a first battery cell 20a located in the upper row is located on a wall of the upper end of the first battery cell 20a, while the electrode terminal 214a of a first battery cell 20a located in the lower row is located on a wall of the lower end of the first battery cell 20a. Under the condition that the second battery cell group 200b is not provided, a long busbar is required to electrically connect the two first battery cells 20a located in the upper row and the lower row. However, in this embodiment of this application, the second battery cell group 200b can be used to implement electrical connection between the two first battery cells 20a in the upper row and the lower row, thereby simplifying the busbar design for the battery 10 and improving the energy density and overall performance of the battery 10.

Specifically, in the embodiment shown in FIG. 14, for shapes and arrangement of the first battery cells 20a and the second battery cells 20b, reference may be made to the related technical solutions of the first battery cell 20a and the second battery cell 20b in FIG. 11 above. That is, the thickness directions of the first battery cell 20a and the second battery cell 20b are both parallel to the second direction y, and the second wall 202a of the first battery cell 20a and the second wall 202b of the second battery cell 20b that face the second direction y may be their walls at their largest area.

It can be understood that in another embodiment, for shape and arrangement of the first battery cells 20a and the second battery cells 20b in FIG. 14, reference may also be made to the related technical solutions of the first battery cell 20a and the second battery cell 20b shown in FIG. 12. That is, the thickness directions of the first battery cell 20a and the second battery cell 20b are both parallel to the third direction z, and the first wall 201a of the first battery cell 20a and the first wall 201b of the second battery cell 20b that face the third direction z may be their walls at their largest area.

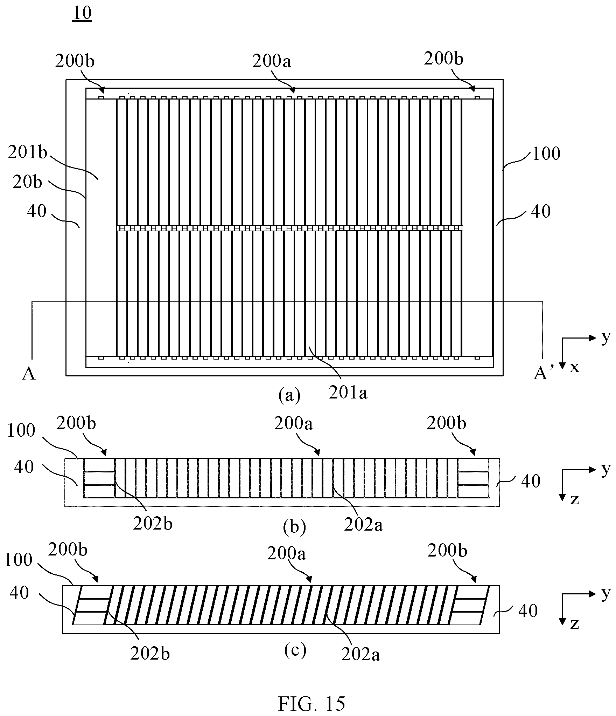

FIG. 15 is a schematic top view and several cross-sectional views of a battery 10 according to an embodiment of this application. (a) of FIG. 15 shows a schematic top view of the battery 10, (b) of FIG. 15 shows a schematic cross-sectional view of the battery 10 along direction A-A' in (a), and (c) of FIG. 15 shows another schematic cross-sectional view of the battery 10 along direction A-A' in (a).

As shown in FIG. 15, the battery 10 may include two columns of second battery cell groups 200b. In the second direction y, the two columns of second battery cell groups 200b are disposed on two ends of a whole formed by a plurality of first battery cell groups 200a, respectively.

Alternatively, in some other implementations, the battery 10 may include only one column of second battery cell groups 200b, which may be disposed on one end of a whole formed by a plurality of first battery cell groups 200a.

Or, in some other implementations, the battery 10 may include a plurality of columns of second battery cell groups 200b. The plurality of columns of second battery cell groups 200b may be arranged in the second direction y and mutually attached, and disposed on one end of a whole formed by the plurality of first battery cell groups 200a.

Specifically, in this embodiment of this application, for shapes and arrangement of the first battery cells 20a and the second battery cells 20b, reference may be made to the related technical solutions of the first battery cell 20a and the second battery cell 20b in FIG. 13. That is, the thickness directions of the first battery cells 20a are all parallel to the second direction y, and the second wall 202a of the first battery cell 20a facing the second direction y is the wall with the largest area, while the thickness directions of the second battery cells 20b are all parallel to the third direction z, and the first wall 201b of the second battery cell 20b facing the third direction z may be the wall with the largest area.

Based on the technical solution in this embodiment of this application, in a column of second battery cell groups 200b, a plurality of second battery cells 20b each have a large-area first wall 201b facing the third direction z instead of the second direction y, so that the one column of second battery cell group 200b has a small degree of swelling in the second direction y, and the column of second battery cell group 200b has high strength and stiffness in the second direction y. Therefore, the one column of second battery cell groups 200b may serve as an end plate located on at least one end of a whole formed by a plurality of first battery cell groups 200a, and can form a support in the second direction y for the plurality of first battery cell groups 200a as a whole, and experience the stress accumulated in the second direction y by the second walls 202a of the first battery cells 20a in the plurality of first battery cell groups 200a, enhancing the overall stiffness and strength of the battery 10 in the second direction y.

As shown in (c)s of FIG. 11 to FIG. 15 above, the first battery cell 20a and the second battery cell 20b each have a parallelogram cross section on the yz plane, and the second wall 202a of the first battery cell 20a and the second wall 202b of the second battery cell 20b are inclined with respect to the third direction z. The third direction z is parallel to the direction of gravity. Therefore, in this implementation, interaction forces in the direction of gravity can be formed between adjacent battery cells, so that at least one inclined second wall of each battery cell is pressed by an inclined second wall of an adjacent battery cell, resulting in interaction forces formed between adjacent battery cells to cause the two to be mutually restrained and restricted, which can enhance the overall stiffness and strength of the battery 10 and reduce the potential safety hazards caused by vibration and impact of the battery 10 during use.

Optionally, the first battery cell 20a and the second battery cell 20b both may alternatively have a trapezoid cross section on the yz plane, which can also realize the mutual restraint and restriction between the adjacent battery cells and enhance the overall stiffness and strength of the battery, reducing the potential safety hazards caused by vibration and impact of the battery during use.

Optionally, as shown in FIG. 11 to FIG. 15 above, in order to ensure the stability of installation of the first battery cell groups 200a and the second battery cell groups 200b in the box 100, the battery 10 may further include an end plate 40 disposed on at least one end of a whole formed by the first battery cell groups 200a and the second battery cell groups 200b in the second direction y, to support and restrain the first battery cell groups 200a and the second battery cell groups 200b as a whole in the second direction y. Optionally, in some implementations, the end plate 40 may be a side wall of the box 100 in the second direction y.

Optionally, as shown in (a)s of FIG. 11 to FIG. 15, the end plate 40 may extend in the length direction (that is, the first direction x in the figures) of the first battery cell 20a and the second battery cell 20b to sufficiently attach to the first battery cell group 200a or the second battery cell group 200b and to support the first battery cell group 200a or the second battery cell group 200b.

Specifically, as shown in (c)s of FIG. 11 to FIG. 15, if the second wall 202a of the first battery cell 20a or the second wall 202b of the second battery cell 20b is an inclined wall with respect to the direction of gravity (the third direction z shown in the figures), the end plate 40 may have an inclined wall with respect to the direction of gravity so as to adapt to the second wall 202a of the first battery cell 20a or the second wall 202b of the second battery cell 20b, where the inclined wall is configured for attachment to the second wall 202a of at least one first battery cell 20a in the first battery cell group 200a or the second wall 202b of at least one second battery cell 20b in the second battery cell group 200b.

In addition, as shown in (c)s of FIG. 11 to FIG. 15, the cross section of the end plate 40 may be right trapezoid, where one of end surfaces of the end plate 40 is configured to adapt to the second wall 202a of the first battery cell 20a or the second wall 202b of the second battery cell 20b, and the other end surfaces are parallel or perpendicular to the horizontal plane, which can be better adapted for installation in the box 100 of a regular shape such as a hollow rectangular structure, and improve the stability of installation of the end plate 40 and its attached first battery cell group 200a or second battery cell group 200b in the box 100. In addition, a local region of the end plate 40 of this structure has a larger thickness in the second direction y, and thus the local region has higher stiffness and strength in the second direction y, enhancing the overall stiffness, strength, and stability of the battery 10.

Optionally, the end plate 40 can be designed in such a way that the thickness of an end of the end plate 40 facing the direction of gravity is greater than the thickness of an end of the end plate 40 facing the opposite direction of gravity. In this implementation, the end plate 40 has a larger thickness at an end facing the direction of gravity, thus ensuring that the end of the battery 10 facing the direction of gravity has higher stiffness, strength and stability. When the battery 10 is installed on a chassis of a vehicle, the battery 10 can better resist external impact, for example, flying stones from the bottom of the vehicle, enhancing the stability of installation of the battery 10 in the vehicle and ensuring the operation performance of the battery 10.

In other implementations, as shown in (b)s of FIG. 11 to FIG. 15, if the second wall 202a of the first battery cell 20a or the second wall 202b of the second battery cell 20b is parallel to the direction of gravity (the third direction z shown in the figures), the end plate 40 may also be a conventional rectangular plate-like structure to attach to the second wall 202a of the first battery cell 20a or the second wall 202b of the second battery cell 20b.

Certainly, FIG. 11 to FIG. 15 only schematically illustrate several schematic structural views of the end plate 40 according to the embodiments of this application, the end plate 40 may be other shapes than those shown in the foregoing embodiments, the end plate 40 may not be attached to the second wall 202a of the first battery cell 20a or the second wall 202b of the second battery cell 20b, and a gap between the end plate 40 and the first battery cell 20a or the second battery cell 20b may be filled by a structural adhesive or other related members.

In the foregoing embodiments of this application, at least one first battery cell group 200a and at least one second battery cell group 200b are mutually attached to form a whole in the box 100. Optionally, a spacer may be further provided between the at least one first battery cell group 200a and the at least one second battery cell group 200b to further enhance the overall stiffness and strength of the battery 10.

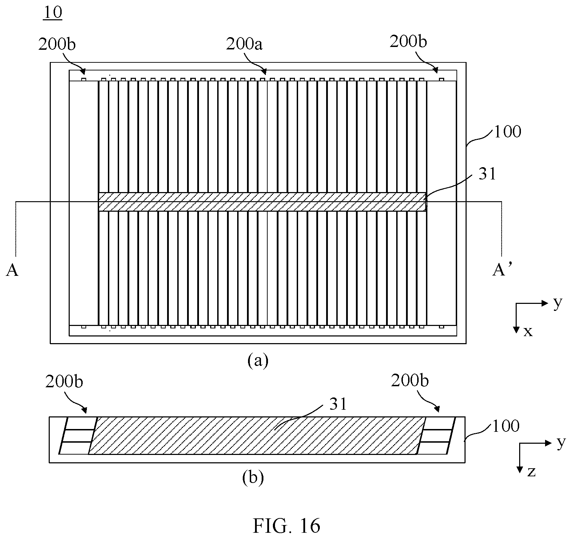

FIG. 16 is a schematic top view and a cross-sectional view of a battery 10 according to an embodiment of this application. (a) of FIG. 16 is a schematic top view of the battery 10, and (b) of FIG. 16 is a schematic cross-sectional view of the battery 10 along direction A-A' in (a).

As shown in FIG. 16, in the first battery cell group 200a, a first spacer 31 is disposed between adjacent first battery cells 20a, where the first spacer 31 is at least one of the following structures: a beam, a thermal management component, and a structural adhesive.

Optionally, as shown in FIG. 16, the first spacer 31 may extend in the second direction y, where a length of the first spacer 31 may be greater than or equal to an overall length of a plurality of first battery cell groups 200a in the battery 10 in the second direction y, so that the first spacer 31 may be sufficiently spaced between adjacent two rows of first battery cells 20a in the plurality of first battery cell groups 200a. In an example, in the second direction y, two ends of the first spacer 31 may abut against the second battery cell groups 200b located at two ends of the plurality of first battery cell groups 200a to enhance the stability of the first spacer 31 in the box 100 and to further enhance the stability of the plurality of first battery cell groups 200a and second battery cell groups 200b in the box 100 that are attached to the first spacer 31.

In an example, in case of a beam, the first spacer 31 may have enough stiffness and strength, and therefore, the first spacer 31 being disposed between adjacent first battery cells 20a in the first battery cell group 200a can enhance the overall stiffness and strength of the battery 10 and improve the overall impact resistance of the battery 10. In addition, if the first spacer 31 is a thermal management component, for example, a cooling component such as a cooling plate, the thermal management component has a battery cell thermal management function in addition to certain stiffness and strength and can adjust temperatures of the first battery cells 20a, further ensuring the working performance and safety performance of the battery 10. As other alternative implementations, the first spacer 31 may alternatively be a structural adhesive with a certain thickness or other types of components, intended to be spaced between adjacent first battery cells 20a in the first battery cell group 200a. A specific structure of the first spacer 31 is not limited in this embodiment of this application.

For the battery 10 shown in (a) of FIG. 16, the first spacer 31 may be located in the middle of the box 100, and the temperature in the middle of the box 100 is generally higher. Therefore, when the first spacer 31 is a thermal management component, especially a cooling component, the temperature in the middle of the box 100 can be well reduced, thereby improving the overall safety performance of the battery 10.

In addition to the foregoing first spacer 31, optionally, the battery 10 in this application may further include a second spacer 32, which may be disposed in at least one of the following positions: between adjacent first battery cell groups 200a, between adjacent second battery cell groups 200b, or between a first battery cell group 200a and a secondbattery cell group 200b that are adjacent. The second spacer 32 is at least one of the following structures: a beam, a thermal management part and a structural adhesive.

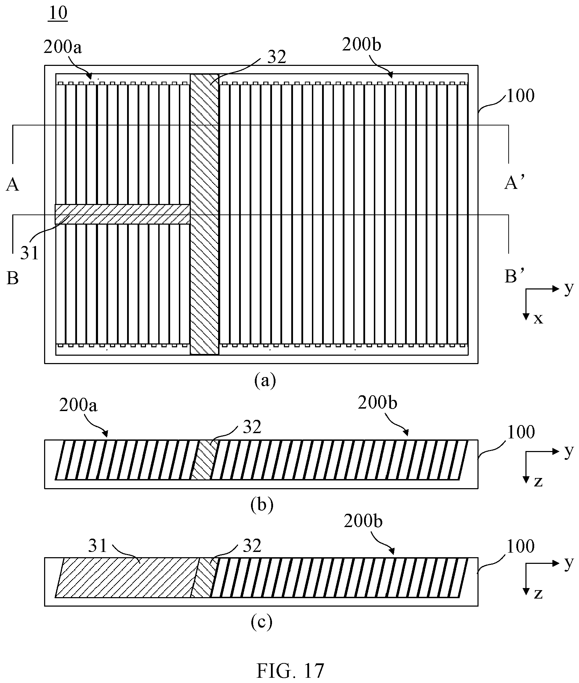

FIG. 17 shows a schematic top view and several cross-sectional views of a battery 10 according to an embodiment of this application. (a) of FIG. 17 is a schematic top view of the battery 10, (b) of FIG. 17 is a schematic cross-sectional view of the battery 10 along direction A-A' in (a), and (c) of FIG. 17 is a schematic cross-sectional view of the battery 10 along direction B-B' in (a).

As shown in FIG. 17, in this embodiment of this application, the second spacer 32 is disposed between the first battery cell group 200a and the second battery cell group 200b that are adjacent in the second direction y. The second spacer 32 may be attached to the first battery cell group 200a and the second battery cell group 200b that are adjacent thereto.

In an example, as shown in (b) of FIG. 17, the first battery cell 20a and the second battery cell 20b may each have a parallelogram cross section on the yz plane, and the second wall 202a of the first battery cell 20a and the second wall 202b of the second battery cell 20b are both inclined with respect to the direction of gravity (the third direction z shown in the figure) and parallel to each other. The second spacer 32 also has a parallelogram cross section on the yz plane and has two walls disposed opposite each other and inclined with respect to the third direction z to attach to the second wall 202a of the first battery cell 20a and the second wall 202b of the second battery cell 20b that are adjacent thereto, respectively.

In addition, as shown in (a) of FIG. 17, the second spacer 32 may extend in the first direction x, where a length of the second spacer 32 may be greater than or equal to a length of the first battery cell group 200a and/or the second battery cell group 200b in the first direction x, so that the second spacer 32 may be sufficiently spaced between the first battery cell group 200a and the second battery cell group 200b that are adjacent. In an example, two ends of the second spacer 32 in the first direction x may separately abut against the box 100 to enhance the stability of the second spacer 32 in the box 100, and further enhance the stability of the first battery cell group 200a and the second battery cell group 200b in the box 100 that are attached to the second spacer 32.

In an example, in case of a beam, the second spacer 32 may have enough stiffness and strength, and therefore, the second spacer 32 being disposed between the first battery cell group 200a and the second battery cell group 200b can enhance the overall stiffness and strength of the battery 10 and improve the overall impact resistance of the battery 10. In addition, the second spacer 32 can also support the second wall 202a of the first battery cell 20a and the second wall 202b of the second battery cell 20b, and under the condition that the first battery cell 20a and the second battery cell 20b swell, prevent continuous accumulation of stress in the arrangement direction of the first battery cells 20a and the second battery cells 20b (that is, the second direction y), enhance the strength and stiffness of the battery 10 in the second direction y, and improve the overall stability and safety of the battery 10. Furthermore, the second spacer 32 can also block heat transfer, especially when the second wall 202a of the first battery cell 20a to which the second spacer 32 is attached is the wall with the largest area and/or the second wall 202b of the second battery cell 20b to which the second spacer 32 is attached is the wall with the largest area. When thermal runaway occurs in a battery cell (such as the first battery cell 20a) located on one side of the second spacer 32, a large amount of heat generated by the battery cell is blocked to a certain extent by the second spacer 32, thereby preventing heat from being transferred to the battery cell on the other side of the second spacer 32 (for example, the second battery cell 20b), ensuring normal operation of the battery cell 20 on the other side of the second spacer 32 and improving the overall safety of the battery 10.

The second spacer 32 can be not only a beam, but also a thermal management component, such as a cooling component such as a cooling plate. As other alternative implementations, the second spacer 32 may alternatively be a structural adhesive with a certain thickness or other types of components. A specific structure of the second spacer 32 is not limited in this embodiment of this application.

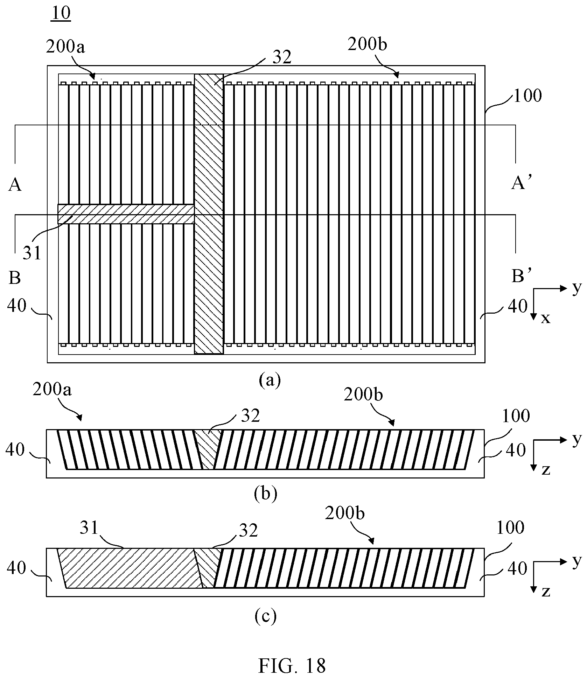

FIG. 18 is a schematic top view and several cross-sectional views of a battery 10 according to an embodiment of this application. (a) of FIG. 18 is a schematic top view of the battery 10, (b) of FIG. 18 is a schematic cross-sectional view of the battery 10 along direction A-A' in (a), and (c) of FIG. 18 is a schematic cross-sectional view of the battery 10 along direction B-B' in (a).

As shown in (b) and (c) of FIG. 18, the second spacer 32 has a trapezoid cross section on the yz plane.

In other words, in this embodiment of this application, the second wall 202a of the first battery cell 20a and the second wall 202b of the second battery cell 20b that are located on two sides of the second spacer 32 are not parallel to each other. Optionally, an included angle between the second wall 202a of the first battery cell 20a located on one side of the second spacer 32 and the third direction z may be θ₁, and an included angle between the second wall 202a of the second battery cell 20b located on the other side of the second spacer 32 and the third direction z may be -θ₂. For the range of θ₁ and θ₂, reference may be made to the related descriptions of the range of θ above.

Optionally, as shown in (b) of FIG. 18, the second walls 202a of a plurality of first battery cells 20a located on one side of the second spacer 32 are parallel to each other and mutually attached. Similarly, the second walls 202b of a plurality of second battery cells 20b located on the other side of the second spacer 32 are also parallel to each other and mutually attached. The second wall 202a of the first battery cell 20a and the second wall 202b of the second battery cell 20b may be symmetrical with respect to the third direction z.

In this case, when a plurality of battery cells in the battery 10 swell, the stress generated by the second walls 202a of the plurality of first battery cells 20a in the second direction y can partially offset the stress generated by the second walls 202b of the plurality of second battery cells 20b in the second direction y, thereby further enhancing the overall stiffness and strength of the battery 10, enhancing the stability of the battery 10, and ensuring the safety performance of the battery 10.

In this implementation, the battery 10 may include two end plates 40, and the thickness of one end of each end plate 40 facing the direction of gravity is greater than the thickness of its opposite end facing the opposite direction of gravity, that is, each end plate 40 has a larger thickness at one end facing the direction of gravity, thereby ensuring that one end of the battery 10 facing the direction of gravity has higher stiffness, strength and stability in the second direction y. When the battery 10 is installed on a chassis of a vehicle, the battery 10 can better resist external impact, for example, flying stones from the bottom of the vehicle, enhancing the stability of installation of the battery 10 in the vehicle and ensuring the operation performance of the battery 10.

An embodiment of this application further provides an electric apparatus, where the electric apparatus may include the battery 10 in the foregoing embodiments, and the battery 10 is configured to supply electric energy to the electric apparatus.

Optionally, the electric apparatus can be a vehicle 1, a ship, or a spacecraft.

The foregoing describes the battery 10 and the electric apparatus in the embodiments of this application; and the following describes a method and apparatus formanufacturing battery in the embodiments of this application. For those not described in detail, refer to the foregoing embodiments.

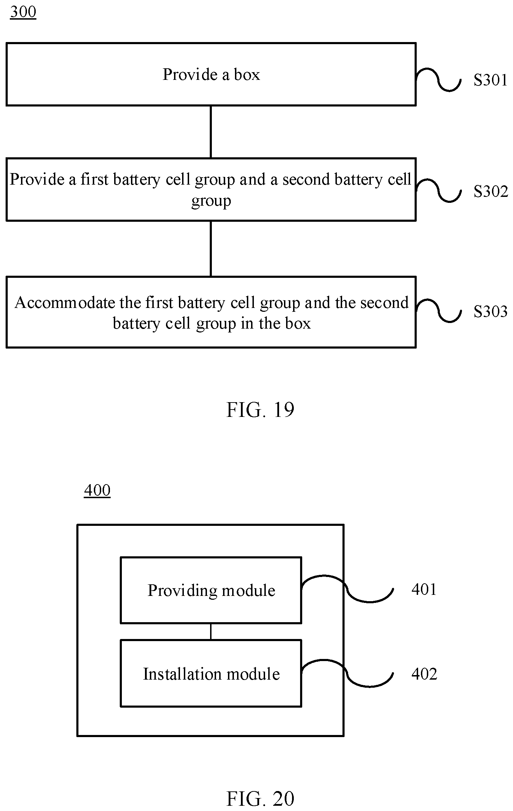

FIG. 19 is a schematic flowchart of a method 300 for manufacturing battery according to an embodiment of this application. As shown in FIG. 19, the method 300 may include the following steps.

S301. Provide a box 100.

S302. Provide a first battery cell group 200a and a second battery cell group 200b, where the first battery cell group 200a includes at least one first battery cell 20a, the second battery cell group 200b includes at least one second battery cell 20b, and the first battery cell 20a and the second battery cell 20b have a same battery capacity and different volumetric energy densities. The at least one first battery cell 20a in the first battery cell group 200a is arranged in the first direction x, the at least one second battery cell 20b in the second battery cell group 200b is arranged in the first direction x, and the first battery cell group 200a and the second battery cell group 200b are arranged in the second direction y, where the first direction x is perpendicular to the second direction y. In addition, a size of the first battery cell 20a in the first direction x is different from a size of the second battery cell 20b in the first direction x, and a size of the first battery cell group 200a in the first direction x is the same as a size of the second battery cell group 200b in the first direction x.

S303. Accommodate the first battery cell group 200a and the second battery cell group 200b in the box 100.

FIG. 20 is a schematic block diagram of an apparatus 400 for manufacturing battery according to an embodiment of this application. As shown in FIG. 20, the apparatus 400 for manufacturing battery may include a providing module 401 and an installation module 402.

The providing module 401 is configured to provide a box 100 and provide a first battery cell group 200a and a second battery cell group 200b, where the first battery cell group 200a includes at least one first battery cell 20a, the second battery cell group 200b includes at least one second battery cell 20b, and the first battery cell 20a and the second battery cell 20b have a same battery capacity and different volumetric energy densities. The at least one first battery cell 20a in the first battery cell group 200a is arranged in the first direction x, the at least one second battery cell 20b in the second battery cell group 200b is arranged in the first direction x, and the first battery cell group 200a and the second battery cell group 200b are arranged in the second direction y, where the first direction x is perpendicular to the second direction y. In addition, a size of the first battery cell 20a in the first direction x is different from a size of the second battery cell 20b in the first direction x, and a size of the first battery cell group 200a in the first direction x is the same as a size of the second battery cell group 200b in the first direction x.

The installation module 403 is configured to accommodate the first battery cell group 200a and the second battery cell group 200b in the box 100.

Although this application has been described with reference to some preferred embodiments, various modifications can be made to this application and components in this application can be replaced with equivalents, without departing from the scope of this application. In particular, as long as there is no structural conflict, the various technical features mentioned in the embodiments can be combined in any manners. This application is not limited to the specific embodiments disclosed in this specification, but includes all technical solutions falling within the scope of the claims.

## Claims

1. A battery (10), **characterized by** comprising:
a box (100); and
a first battery cell group (200a) and a second battery cell group (200b) that are accommodated in the box (100), wherein the first battery cell group (200a) comprises at least one first battery cell (20a), the second battery cell group (200b) comprises at least one second battery cell (20b), and the first battery cell (20a) and the second battery cell (20b) have a same battery capacity and different volumetric energy densities;
the at least one first battery cell (20a) in the first battery cell group (200a) is arranged in a first direction (x), the at least one second battery cell (20b) in the second battery cell group (200b) is arranged in the first direction (x), and the first battery cell group (200a) and the second battery cell group (200b) are arranged in a second direction (y), wherein the first direction (x) is perpendicular to the second direction (y); and
a size of the first battery cell (20a) in the first direction (x) is different from a size of the second battery cell (20b) in the first direction (x), and a size of the first battery cell group (200a) in the first direction (x) is the same as a size of the second battery cell group (200b) in the first direction (x).

2. The battery (10) according to claim 1, **characterized in that** the first direction (x) is parallel to a length direction of the first battery cell (20a) and/or the first direction (x) is parallel to a length direction of the second battery cell (20b).

3. The battery (10) according to claim 1 or 2, **characterized in that** the second direction (y) is parallel to a thickness direction of the first battery cell (20a), and/or the second direction (y) is parallel to a thickness direction of the second battery cell (20b).

4. The battery (10) according to claim 1 or 2, **characterized in that** a third direction (z) perpendicular to the first direction (x) and the second direction (y) is parallel to the thickness direction of the first battery cell (20a), and/or a third direction (z) perpendicular to the first direction (x) and the second direction (y) is parallel to the thickness direction of the second battery cell (20b).

5. The battery (10) according to claim 4, **characterized in that** the battery (10) comprises a plurality of first battery cell groups (200a) arranged in the third direction (z) and/or a plurality of second battery cell groups (200b) arranged in the third direction (z).

6. The battery (10) according to any one of claims 1 to 5, **characterized in that** the battery (10) comprises a plurality of first battery cell groups (200a) arranged in the second direction (y) and at least one second battery cell group (200b) arranged in the second direction (y), wherein the size of the first battery cell (20a) in the first direction (x) is less than the size of the second battery cell (20b) in the first direction (x).

7. The battery (10) according to claim 6, **characterized in that** in the second direction (y), the at least one second battery cell group (200b) is disposed between adjacent two of the first battery cell groups (200a).

8. The battery (10) according to claim 6, **characterized in that** in the second direction (y), the at least one second battery cell group (200b) is disposed on at least one end of a whole formed by the plurality of first battery cell groups (200a).

9. The battery (10) according to claim 7 or 8, **characterized in that** the thickness direction of the first battery cell (20a) is parallel to the second direction (y), and the thickness direction of the second battery cell (20b) is parallel to the third direction (z), wherein the third direction (z) is perpendicular to the first direction (x) and the second direction (y).

10. The battery (10) according to any one of claims 1 to 9, **characterized in that** the first battery cell (20a) comprises a first wall and a second wall that are interconnected, the second battery cell (20b) comprises a first wall and a second wall, the first wall of the first battery cell (20a) and the first wall of the second battery cell (20b) are perpendicular to the direction of gravity, and the second wall of the first battery cell (20a) and the second wall of the second battery cell (20b) are inclined with respect to the direction of gravity; and
the second wall of the at least one first battery cell (20a) in the first battery cell group (200a) is configured for attachment to the second wall of at least one second battery cells (20b) in the second battery cell group (200b).

11. The battery (10) according to claim 10, **characterized in that** the first battery cell (20a) comprises two first walls disposed opposite each other and two second walls disposed opposite each other, and the first battery cell (20a) has a parallelogram or trapezoid cross section on a plane perpendicular to the first walls and the second walls thereof; and/or
the second battery cell (20b) comprises two first walls disposed opposite each other and two second walls disposed opposite each other, and the second battery cell (20b) has a parallelogram or trapezoid cross section on a plane perpendicular to the first walls and the second walls thereof.

12. The battery (10) according to claim 10 or 11, **characterized in that** the first wall and the second wall that are interconnected in the first battery cell (20a) extend in the length direction of the first battery cell (20a); and/or
the first wall and the second wall that are interconnected in the second battery cell (20b) extend in the length direction of the second battery cell (20b).

13. The battery (10) according to any one of claims 10 to 12, **characterized in that** the first battery cell (20a) further comprises a third wall located on an end of the first battery cell (20a) in the length direction, and electrode terminals and/or a pressure relief mechanism of the first battery cell (20a) is disposed on the third wall of the first battery cell (20a); and/or
the second battery cell (20b) further comprises a third wall located on one end of the second battery cell (20b) in the length direction, and an electrode terminal and/or a pressure relief mechanism of the second battery cell is disposed on the third wall of the second battery cell (20b).

14. The battery (10) according to any one of claims 10 to 13, **characterized in that** the battery (10) further comprises an end plate (40) disposed on at least one end of a whole formed by the first battery cell group (200a) and the second battery cell group (200b) in the second direction (y);
wherein the end plate (40) has an inclined wall with respect to the direction of gravity, and the inclined wall is configured for attachment to the second wall of the at least one first battery cell (20a) in the first battery cell group (200a) and/or the inclined wall is configured for attachment to the second wall of at least one second battery cell (20b) in the second battery cell group (200b).

15. The battery (10) according to claim 14, **characterized in that** a thickness of the end plate (40) facing the direction of gravity is greater than a thickness of the end plate (40) facing the opposite direction of gravity.

16. The battery (10) according to any one of claims 1 to 15, **characterized in that** in the first battery cell group (200a), a first spacer (31) is disposed between adjacent ones of the first battery cells (20a), wherein the first spacer (31) is at least one of the following structures: a beam, a thermal management component, and a structural adhesive.

17. The battery (10) according to any one of claims 1 to 16, **characterized in that** a second spacer (32) is disposed between the first battery cell group (200a) and the second battery cell group (200b), wherein the second spacer (32) is at least one of the following structures: a beam, a thermal management component, and a structural adhesive.

18. An electric apparatus, **characterized by** comprising the battery (10) according to any one of claims 1 to 17, wherein the battery (10) is configured to supply electric energy to the electric apparatus.

19. A method for manufacturing battery, **characterized by** comprising:
providing (S301) a box (100);
providing (S302) a first battery cell group (200a) and a second battery cell group (200b), wherein the first battery cell group (200a) comprises at least one first battery cell (20a), the second battery cell group (200b) comprises at least one second battery cell (20b), and the first battery cell (20a) and the second battery cell (20b) have a same battery capacity and different volumetric energy densities;
the at least one first battery cell (20a) in the first battery cell group (200a) is arranged in a first direction (x), the at least one second battery cell (20b) in the second battery cell group (200b) is arranged in the first direction (x), and the first battery cell group (200a) and the second battery cell group (200b) are arranged in a second direction (y), wherein the first direction (x) is perpendicular to the second direction (y); and
a size of the first battery cell (20a) in the first direction (x) is different from a size of the second battery cell (20b) in the first direction (x), and a size of the first battery cell group (200a) in the first direction (x) is the same as a size of the second battery cell group (200b) in the first direction (x); and
accommodating (S303) the first battery cell group (200a) and the second battery cell group (200b) in the box (100).

20. An apparatus for manufacturing battery, **characterized by** comprising:
a providing module (401), configured to:
provide a box (100); and
provide a first battery cell group (200a) and a second battery cell group (200b), wherein the first battery cell group (200a) comprises at least one first battery cell (20a), the second battery cell group (200b) comprises at least one second battery cell (20b), and the first battery cell (20a) and the second battery cell (20b) have a same battery capacity and different volumetric energy densities;
the at least one first battery cell (20a) in the first battery cell group (200a) is arranged in a first direction (x), the at least one second battery cell (20b) in the second battery cell group (200b) is arranged in the first direction (x), and the first battery cell group (200a) and the second battery cell group (200b) are arranged in a second direction (y), wherein the first direction (x) is perpendicular to the second direction (y); and
a size of the first battery cell (20a) in the first direction (x) is different from a size of the second battery cell (20b) in the first direction (x), and a size of the first battery cell group (200a) in the first direction (x) is the same as a size of the second battery cell group (200b) in the first direction (x); and
an installation module (402), configured to:
accommodate the first battery cell group (200a) and the second battery cell group (200b) in the box (100).
